(19)

**Europäisches Patentamt**
**European Patent Office**
**Office européen des brevets**

(11) **EP 4 394 722 A1**

(12) **EUROPEAN PATENT APPLICATION**
published in accordance with Art. 153(4) EPC

(43) Date of publication:
**03.07.2024 Bulletin 2024/27**

(21) Application number: **23798073.5**

(22) Date of filing: **07.11.2023**

(51) International Patent Classification (IPC):
*G06T 19/20* (2011.01)        *G06T 19/00* (2011.01)
*G06T 7/70* (2017.01)         *G06T 7/30* (2017.01)
*G06T 5/20* (2006.01)         *H04N 23/69* (2023.01)
*G02B 27/01* (2006.01)

(86) International application number:
**PCT/KR2023/017758**

(87) International publication number:
**WO 2024/101847 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.11.2022  KR 20220147205
29.11.2022  KR 20220163205**

(71) Applicant: **Samsung Electronics Co., Ltd.
Suwon-si, Gyeonggi-do 16677 (KR)**

(72) Inventors:
• **NAM, Sangbeom**
  Suwon-si, Gyeonggi-do 16677 (KR)
• **LIM, Chaiman**
  Suwon-si, Gyeonggi-do 16677 (KR)
• **KANG, Myungkil**
  Suwon-si, Gyeonggi-do 16677 (KR)
• **LEE, Jaemyeon**
  Suwon-si, Gyeonggi-do 16677 (KR)

(74) Representative: **Gulde & Partner
Patent- und Rechtsanwaltskanzlei mbB
Wallstraße 58/59
10179 Berlin (DE)**

(54) **ELECTRONIC DEVICE USING DIGITAL TWIN MODEL AND METHOD FOR OPERATING SAME**

(57)    An electronic device includes a display module, at least one communication module, at least one camera module, and at least one processor. The at least one processor is configured to receive, via the communication module, data associated with a digital twin model simulating the real world. The at least one processor is configured to identify an image captured by the at least one camera module. The at least one processor is configured to, based on the data associated with the digital twin model, identify a first virtual image corresponding to a position of the electronic device and/or a direction toward which the electronic device faces. The at least one processor is configured to identify a difference between the image and the first virtual image, based on matching of a first object included in the image and a first virtual object included in the first virtual image. The at least one processor is configured to, based on the data associated with the digital twin model, identify a second virtual image corresponding to the identified difference. The at least one processor is configured to control the display module to display, on the image, at least one second virtual object of the second virtual image.

FIG. 5A

**Description**

[Technical Field]

The disclosure relates to an electronic device using a digital twin model and an operation method thereof.

[Background Art]

A digital twin model that mimics the real world is being introduced. The digital twin model may include, for example, data including a virtual object corresponding to each of terrain, a building, and/or a facility in the real world. The digital twin model may include additional data as well as data to simulate the real world. The additional data may be data representing an additional virtual object that does not exist in the real world but exists in a virtual world. The additional virtual object may be, for example, an object for virtual reality, augmented reality, and/or mixed reality. The additional virtual object may be placed within the virtual world, but cannot overlap a virtual object corresponding to the real world. For example, if a virtual building object corresponding to a building in the real world exists in the virtual world of the digital twin model, an additional virtual object flying in the virtual world cannot overlap the virtual building object. Accordingly, an additional virtual object located around a virtual object corresponding to an object in the real world may be expressed. An electronic device may display an additional virtual object by using data for expressing the digital twin model. Therefore, an additional virtual object may be expressed as if the object were placed in an image of the real world. Alternatively, if the electronic device is a glasses-type wearable device, the electronic device may display an additional virtual object, and a user may perceive the virtual object as being placed in the real world that is being observed. Depending on a user's point of view, an additional virtual object may be expressed as being covered by a virtual object, or an additional virtual object may be expressed as being placed on a virtual object. In this case, a natural artificial reality service can be provided only if a position of the additional virtual object is accurately determined.

[Detailed Description of the Invention]

[Technical Solution]

According to an embodiment, an electronic device includes a display module, at least one communication module, at least one camera module, and at least one processor. The at least one processor is configured to receive, via the communication module, data associated with a digital twin model simulating the real world. The at least one processor is configured to identify an image captured by the at least one camera module. The at least one processor is configured to, based on the data associated with the digital twin model, identify a first virtual image corresponding to a position of the electronic device and/or a direction toward which the electronic device faces. The at least one processor is configured to identify a difference between the image and the first virtual image, based on matching of a first object included in the image and a first virtual object included in the first virtual image. The at least one processor is configured to, based on the data associated with the digital twin model, identify a second virtual image corresponding to the identified difference. The at least one processor is configured to control the display module to display, on the image, at least one second virtual object of the second virtual image.

According to an embodiment, an operation method of an electronic device includes receiving data associated with a digital twin model simulating the real world. The operation method of the electronic device includes identifying an image captured by at least one camera module of the electronic device. The operation method of the electronic device includes, based on the data associated with the digital twin model, identifying a first virtual image corresponding to a position of the electronic device and/or a direction toward which the electronic device faces. The operation method of the electronic device includes, based on matching of a first object included in the image and a first virtual object included in the first virtual image, identifying a difference between the image and the first virtual image. The operation method of the electronic device includes, based on the data associated with the digital twin model, identifying a second virtual image corresponding to the identified difference. The operation method of the electronic device includes displaying, on the image, at least one second virtual object of the second virtual image.

Further, in a computer-readable storage medium storing at least one instruction may cause, the at least one instruction may cause, when executed by at least one processor of an electronic device, the electronic device to perform at least one operation. The at least one operation may include receiving data associated with a digital twin model simulating the real world. The at least one operation may include identifying an image captured by at least one camera module of the electronic device. The at least one operation may include, based on the data associated with the digital twin model, identifying a first virtual image corresponding to a position of the electronic device and/or a direction toward which the electronic device faces. The at least one operation may include, based on matching of a first object included in the image and a first virtual object included in the first virtual image, identifying a difference between the image and the first virtual image. The at least one operation may include, based on the data associated with the digital twin model, identifying a second virtual image corresponding to the identified difference. The at least one operation may include displaying, on the image, at least one second virtual object of the second virtual image.

Further, a wearable electronic device may include a display module, at least one communication module, at least one camera module, and at least one processor. The at least one processor may be configured to receive, via the communication module, data associated with a digital twin model simulating the real world. The at least one processor may be configured to identify an image captured by the at least one camera module. The at least one processor may be configured to, based on the data associated with the digital twin model, identify a first virtual image corresponding to a position of the wearable electronic device and/or a direction toward which the wearable electronic device faces. The at least one processor may be configured to identify a difference between the image and the first virtual image, based on matching of a first object included in the image and a first virtual object included in the first virtual image. The at least one processor may be configured to, based on the data associated with the digital twin model, identify a second virtual image corresponding to the identified difference. The at least one processor may be configured to control the display module to display at least one second virtual object of the second virtual image.

Further, an operation method of a wearable electronic device may include receiving data associated with a digital twin model simulating the real world. The operation method of the wearable electronic device may include identifying an image captured by at least one camera module of the wearable electronic device. The operation method of the wearable electronic device may include, based on the data associated with the digital twin model, identifying a first virtual image corresponding to a position of the wearable electronic device and/or a direction toward which the wearable electronic device faces. The operation method of the wearable electronic device may include, based on matching of a first object included in the image and a first virtual object included in the first virtual image, identifying a difference between the image and the first virtual image. The operation method of the wearable electronic device may include, based on the data associated with the digital twin model, identifying a second virtual image corresponding to the identified difference. The operation method of the wearable electronic device may include displaying at least one second virtual object of the second virtual image.

Further, in a computer-readable storage medium storing at least one instruction may cause, the at least one instruction may cause, when executed by at least one processor of a wearable electronic device, the wearable electronic device to perform at least one operation. The at least one operation may include receiving data associated with a digital twin model simulating the real world. The at least one operation may include identifying an image captured by at least one camera module of the wearable electronic device. The at least one operation may include, based on the data associated with the digital twin model, identifying a first virtual image corresponding to a position of the wearable electronic device and/or a direction toward which the wearable electronic device faces. The at least one operation may include, based on matching of a first object included in the image and a first virtual object included in the first virtual image, identifying a difference between the image and the first virtual image. The at least one operation may include, based on the data associated with the digital twin model, identifying a second virtual image corresponding to the identified difference. The at least one operation may include displaying at least one second virtual object of the second virtual image.

[Brief Description of Drawings]

FIG. 1A is a block diagram of an electronic device in a network environment according to an embodiment;
FIG. 1B is a diagram of the electronic device according to an embodiment;
FIG. 2 is a flowchart illustrating an operation method of an electronic device and a server according to an embodiment;
FIG. 3A is a diagram of the real world simulated by a digital twin model according to an embodiment;
FIG. 3B is the digital twin model simulating the real world of FIG. 3A according to an embodiment;
FIG. 3C is a diagram of a real image captured by an electronic device according to an embodiment;
FIG. 3D is a diagram of a virtual image generated based on the digital twin model according to an embodiment;
FIG. 3E is a diagram of a real image reflecting a virtual object according to an embodiment;
FIG. 4A is a flowchart illustrating an operation method of an electronic device according to an embodiment;
FIG. 4B is a diagram of a virtual image generated according to an embodiment;
FIG. 4C is a diagram of a real image reflecting the generated virtual object according to an embodiment;
FIG. 5A is a flowchart illustrating an operation method of an electronic device according to an embodiment;
FIG. 5B is a diagram of a virtual image generated according to an embodiment;
FIG. 5C is a diagram of a real image reflecting the generated virtual object according to an embodiment;
FIG. 6A is a flowchart illustrating an operation method of an electronic device according to an embodiment;
FIG. 6B is a diagram illustrating a virtual camera in a digital twin model according to an embodiment;
FIG. 7A is a flowchart illustrating an operation method of an electronic device according to an embodiment;

FIG. 7B is a diagram of a foreground image and a virtual image according to an embodiment;
FIG. 7C is a diagram illustrating a difference between the foreground image and the virtual image according to an embodiment;
FIG. 8A is a flowchart illustrating an operation method of an electronic device according to an embodiment;
FIG. 8B is a diagram illustrating a virtual image and a mask according to an embodiment;
FIG. 8C is a diagram illustrating mask generation according to an embodiment;
FIG. 8D illustrates images according to embodiments;
FIG. 8E is a diagram illustrating a maximum allowable positional error range according to an embodiment;
FIG. 8F is a diagram illustrating a procedure of generating a mask according to an embodiment;
FIG. 9 illustrates a flowchart describing an operation method of an electronic device according to an embodiment;
FIG. 10A illustrates a flowchart describing an operation method of an electronic device according to an embodiment;
FIG. 10B and FIG. 10C are diagrams illustrating adjustment of objects in a digital twin model according to an embodiment;
FIG. 11 is a diagram of a wearable electronic device according to an embodiment;
FIG. 12A is a flowchart illustrating an operation method of an electronic device according to an embodiment; and
FIG. 12B is a diagram illustrating a display operation by a wearable electronic device according to an embodiment.

[Mode for Carrying out the Invention]

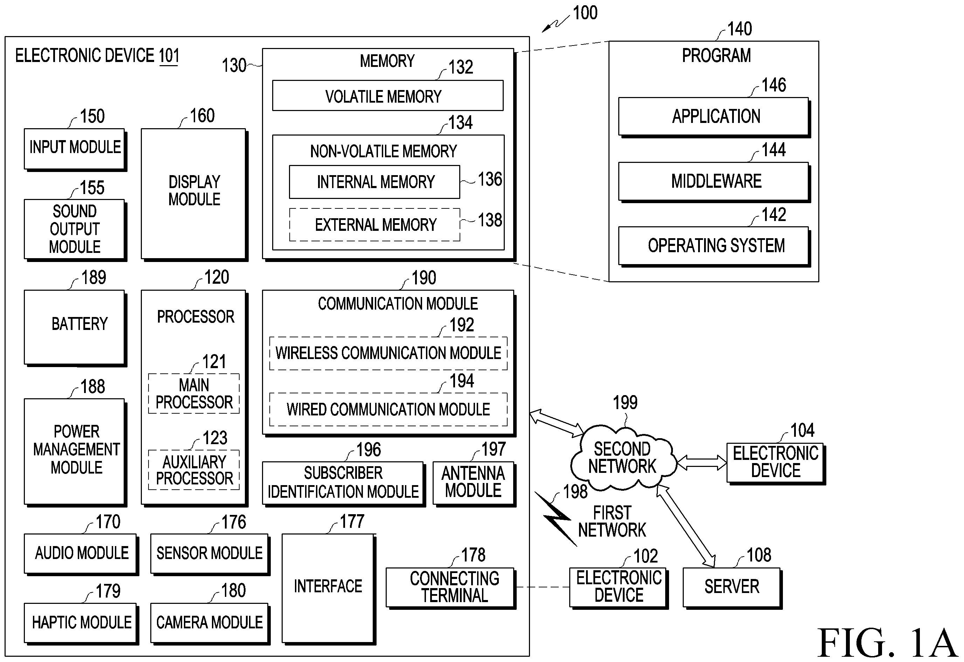

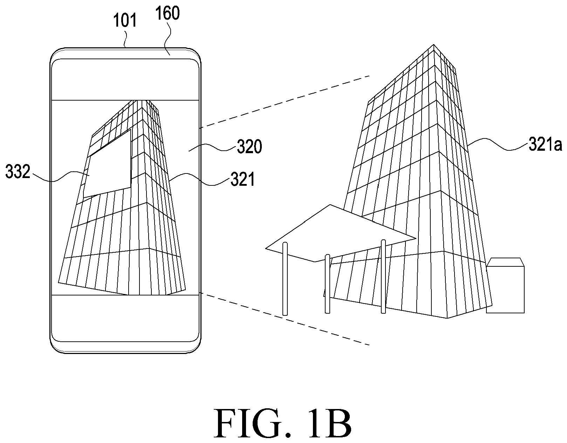

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

FIG. 1B is a diagram of the electronic device according to an embodiment.

According to an embodiment, the electronic device 101 may display, on the display module 160, a real image 320 obtained by image-capturing of the real world by using the camera module 180. The real image 320 may include a real object 321. The real object 321 may be an object corresponding to a building 321a in the real world. In the real world, there may not be any advertisement board attached to the building 321a. An artificial reality service may be a service based on the aforementioned virtual reality, augmented reality, and/or mixed reality. For example, an augmented reality service may provide additional information corresponding to the building 321a in the real world or additional information associated with the building 321a. The electronic device 101 may display, on the real image 320, a virtual object 332 for additional information. Accordingly, the virtual object 332, for example, an advertisement board, may be expressed as if the same were placed on the real object 321. For example, the electronic device 101 may display the virtual object 332 on the real image 320 by using a digital twin model, i.e. a digital twin of the building 321a, that is to be described later. In this case, a natural artificial reality service may be provided only if a targeting position of the virtual object 332 is accurate. In particular, if an effect of the virtual object 332 being displayed on the real object 321 or an effect of another part of the virtual object 332 being covered by the real object 321 is expressed, a high accuracy of the targeting position of the virtual object 332 may be required. The electronic device 101 according to various embodiments of the disclosure may display, on the real image 320, the virtual object 321 identified based on the digital twin model, and may correct an error associated with the position of the virtual object 321 if the error is identified.

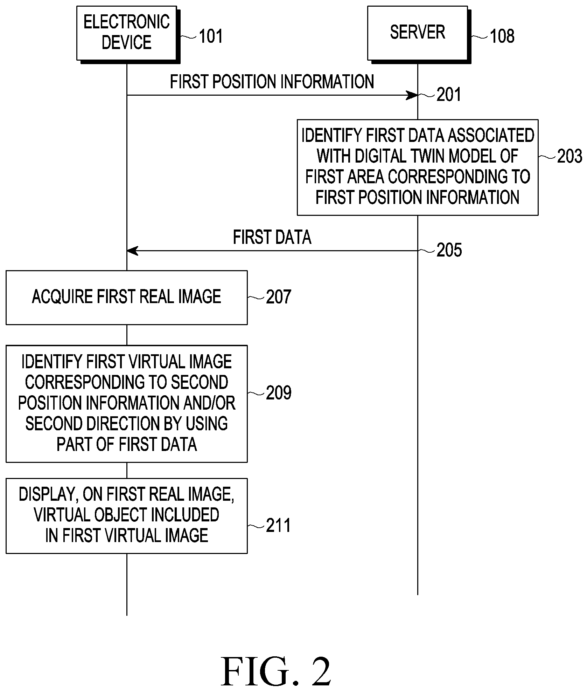

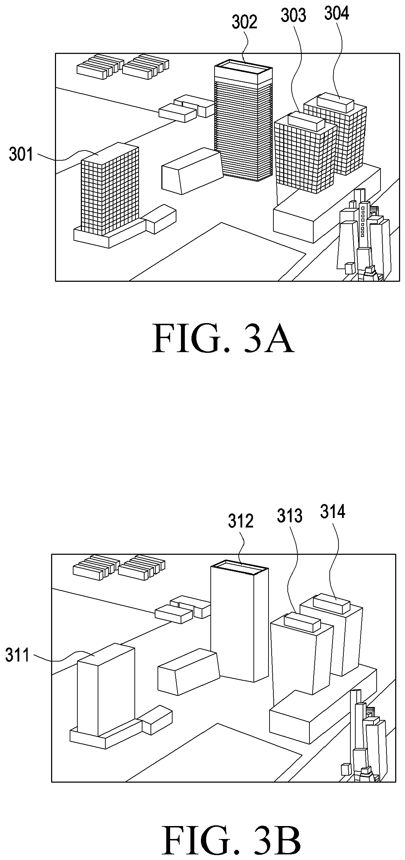

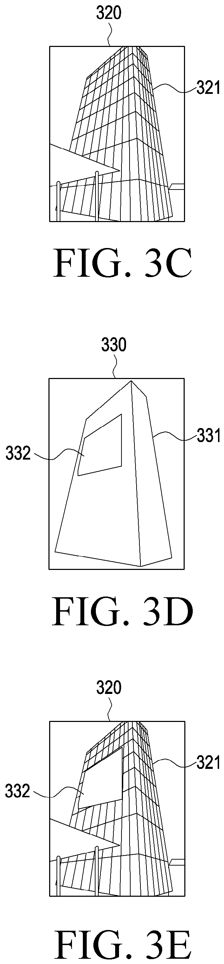

FIG. 2 is a flowchart illustrating an operation method of the electronic device and the server according to an embodiment. The embodiment of FIG. 2 will be described with reference to FIG. 3A to FIG. 3E. FIG. 3A is a diagram of the real world to be simulated by a digital twin model according to an embodiment. FIG. 3B is the digital twin model simulating the real world of FIG. 3A according to an embodiment. FIG. 3C is a diagram of the real image captured by the electronic device according to an embodiment. FIG. 3D is a diagram of the virtual image generated based on the digital twin model according to an embodiment. FIG. 3E is a diagram of the real image reflecting the virtual object according to an embodiment.

According to an embodiment, in operation 201, the electronic device 101 (e.g., its processor 120) may transmit a first position of the electronic device 101 to the server 108. The first position of the electronic device 101 may be expressed in a form based on a global positioning system (GPS), in a form based on a Wi-Fi positioning system (WPS), or in a form based on a video positioning system (VPS), and/or may be expressed in a form (e.g., latitude/longitude) identified based on the GPS, WPS, and/or VPS, but the expression form is not limited. A trigger for transmitting the first position is not limited, and, for example, the trigger may be implemented so that the position is transmitted periodically. In addition to the first position, information requesting data associated with a digital twin may be transmitted from the electronic device 101 to the server 108, but this is exemplary and is not limited.

The server 108 may store, generate, and/or manage, for example, data for a digital twin model. The server 108 may store, in advance, data for the digital twin model for multiple positions including the first position. As described above, the digital twin model may be a model that simulates the real world. For example, as shown in FIG. 3A, multiple real objects 301, 302, 303, and 304 (e.g., buildings and/or facilities, but not limited thereto) may be placed in the real world of a specific city. Here, names of the "real objects" may be used as objects placed in the real world, and there is no restriction on types. The digital twin model may be a model that simulates the real world of the specific city. For example, as shown in FIG. 3B, the digital twin model may include virtual objects 311, 312, 313, and 314 corresponding to the real objects 301, 302, 303, and 304. Data associated with the digital twin model may include information associated with the real objects 301, 302, 303, and 304. A first virtual object 311 may correspond to a first real object 301, a second virtual object 312 may correspond to a second real object 302, etc. For example, a first real object 301 may occupy a first latitude range and a first longitude range of the real world and may have a first height. Also, in the digital twin model, the latitude/longitude and/or height of the specific city may be defined. The first real object may have the first height. The first latitude range, the first longitude range, and/or the first height corresponding to the first virtual object 311 may be stored. The latitude/longitude and/or height are merely examples for convenience of description, and data and/or expression schemes for expressing the virtual objects 311, 312, 313, and 314 are not limited. For example, the data associated with the digital twin model may be expressed as 3D data for expressing the surface of each of the virtual objects 311, 312, 313, and 314. There is no restriction on 3D data expression schemes. In FIG. 3B, the virtual objects 311, 312, 313, and 314 are illustrated as having only appearances without having texture information including colors and/or patterns, but this is exemplary. The data associated with the digital twin model may be implemented to include data and texture information for expressing the surfaces of the virtual objects 311, 312, 313, and 314. An index may be assigned to each of the virtual objects 311, 312, 313, and 314. When at least some of the virtual objects 311, 312, 313, and 314 are loaded, the virtual objects 311, 312, 313, and 314 may be distinguishably expressed (e.g., in different colors), and there is no restriction.

Referring back to FIG. 2, according to an embodiment, in operation 203, the server 108 may identify first data associated with the digital twin model of a first area corresponding to the first position transmitted from the electronic device 101. In operation 205, server 108 may transmit the first data to the electronic device 101. For example, when the first position of the electronic device 101 is expressed as first GPS coordinates, the server 108 may identify the first data associated with the digital twin model of the first area, which includes the first GPS coordinates. For example, in the real world, a user may move from the first position to another position while carrying the electronic device 101, and/or may change an image-capturing direction of the camera module 180 of the electronic device 101. The electronic device 101 needs to provide an artificial reality service in real time even under the changed condition described above. Accordingly, the electronic device 101 may store not only data associated with the digital twin model for a specific direction at the first position, but also data associated with the digital twin model of the first area configured based on the first position. There is no restriction on a scheme of configuring the first area. Accordingly, the server 108 may transmit the data associated with the digital twin model of the first area to the electronic device 101. The electronic device 101 may transmit the moved position to the server 108 so as to receive data associated with at least a part of the digital twin model in another area, and there is no restriction on an update scheme and/or an update trigger.

According to an embodiment, in operation 207, the electronic device 101 may acquire a first real image (i.e. an image of the real world) captured using, for example, the camera module 180. For example, the electronic device 101 may acquire the first real image 320 as shown in FIG. 3C. For example, it is assumed that the user may move from the first position to a second position while carrying the electronic device 101 and acquire the first real image 320 captured at the second position, but this is an example, and the electronic device 101 may acquire the first real image 320 captured at the first position. It is assumed that the first real image 320 is acquired while the camera module 180 of the electronic device 101 faces a second direction. The electronic device 101 may identify the second position and/or the second direction in which the first real image 320 is captured. For example, as described above, the electronic device 101 may identify the second position expressed by GPS, WPS, VPS, and/or latitude/longitude. The electronic device 101 may identify, based on a sensing value of the included sensor module 180 (e.g., a gyro sensor, a geomagnetic sensor, and/or an accelerometer sensor), a direction toward which the electronic device 101 faces, as the second direction toward which the camera module 180 faces. There is no restriction on a scheme of identifying a position and/or a direction. The second position may be, for example, a position included in a first range.

Referring to FIG. 2 and FIG. 3D, according to an embodiment, in operation 209, the electronic device 101 may identify a first virtual image 330 corresponding to the second position and/or the second direction by using a part of the first data received from the server 108. As described above, the first data may be data for expressing the digital twin model of the first area. The electronic device 101 may identify the first virtual image 330 viewable when facing the second direction at the second position included in the first area. For example, the electronic device 101 may define a virtual camera. The electronic device 101 may position the virtual camera at the second position and may configure an image-capturing direction of the virtual camera to be the second direction. The first virtual image 330 may be acquired based on image-capturing by the virtual camera. A first virtual object 331 may be included in the first virtual image 330. As described above, the digital twin model may ideally be the same as the real world, so that, ideally, the position, shape, and/or size of the first virtual object 331 in the first virtual image 330 may be the same as the position, shape, and/or size of the first object 321 in the first real image 320. The second virtual object 332 may be included in the first virtual image 330. The second virtual object 332 is an object that does not exist in the real world and may be an object for the artificial reality service. For example, the second virtual object 332 may be an advertisement board placed on the surface of the first virtual object 331, but this is exemplary. An object for the artificial reality service may be placed on the surface of a virtual object or may be spaced apart from the virtual object. An object for the artificial reality service may be an object that does not move or may be an object that moves over time.

According to an embodiment, referring back to FIG. 2, in operation 211, the electronic device 101 may display, on the first real image, a virtual object included in the first virtual image. For example, referring to FIG. 3E, the electronic device 101 may display the second virtual object 332 on the first real image 320. The electronic device 101 may display, on the first real image 320, only the second virtual object 332 that does not exist in the real world, without displaying the first virtual object 331 corresponding to the first real object 321. Accordingly, the user may recognize as if the second virtual object 332, which is an object for the artificial reality service, were placed on the first real image 320. According to implementation, the electronic device 101 may also display the first virtual object 331 on the first real image 320. Accordingly, the user may identify whether the first virtual object 331 and the first real object 321 are matched. As to be described later, the electronic device 101 may perform an operation for matching one or more times, a position at which the first virtual object 331 is displayed may also be changed, and the user may identify a matching procedure. In other words, the second virtual object 332 may be more accurately displayed on the first real object 321 in the first real image 320 based on placing, in the first virtual image 330, the second virtual object 332 on the first virtual object 331, which corresponds to the first real object 321.

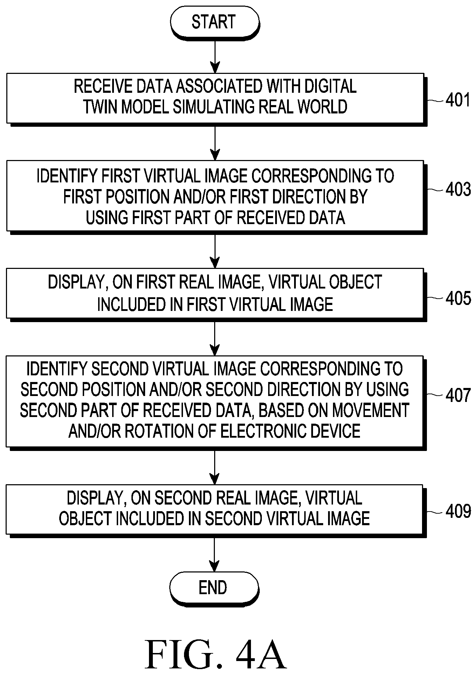

FIG. 4A is a flowchart illustrating an operation method of the electronic device according to an embodiment.

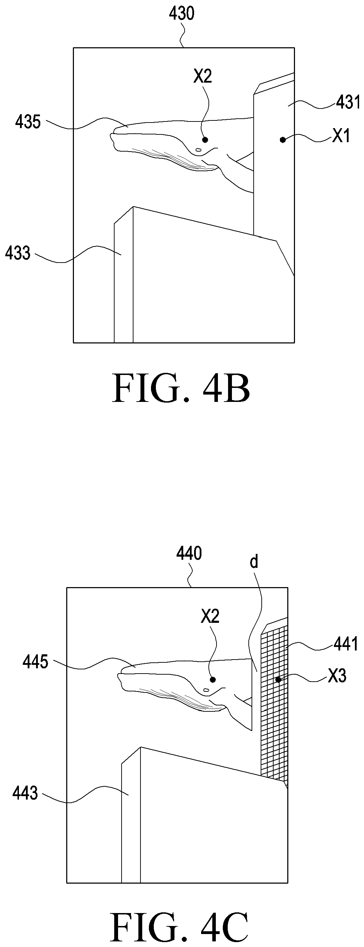

The embodiment of FIG. 4A will be described with reference to FIG. 4B and FIG. 4C. FIG. 4B is a diagram of a virtual image generated according to an embodiment. FIG. 4C is a diagram of the real image reflecting the generated virtual object according to an embodiment.

Referring to FIG. 4A, according to an embodiment, in operation 401, the electronic device 101 (e.g., its processor 120), may receive data associated with a digital twin model simulating the real world. Since reception of the data associated with the digital twin model has been described with reference to FIG. 3A, detailed descriptions will not be repeated here. In operation 403, the electronic device 101 may identify a first virtual image corresponding to a first position and/or a first direction by using a first part of the received data. In operation 405, the electronic device 101 may display, on a first real image, a virtual object included in the first virtual image. Since features of identifying a virtual image corresponding to a position and/or a direction, and displaying, on a real image, a virtual object included in the virtual image have also been described with reference to FIG. 3A, detailed descriptions will not be repeated here.

According to an embodiment, in operation 407, the electronic device 101 may identify, based on movement and/or rotation of the electronic device, a second virtual image corresponding to a second position and/or a second direction by using a second part of the received data, i.e. the data associated with a digital twin model simulating the real world. For example, a user may move from the first position to the second position while carrying the electronic device 101, and/or may change a direction, toward which the electronic device 101 faces, from the first direction to the second direction. The electronic device 101 may capture a second real image at the second position and/or in the second direction. The electronic device 101 may identify the movement and/or rotation of the electronic device 101, based on sensing data from the sensor module 176. The electronic device 101 may acquire the second virtual image for the digital twin model, based on the movement and/or rotation of the electronic device 101. The electronic device 101 may acquire the second virtual image corresponding to the second position and/or the second direction identified based on the movement and/or rotation.

For example, referring to FIG. 4B, a second virtual image 430 may include a first virtual object 431, a second virtual object 433, and a third virtual object 435. Here, it is assumed that the first virtual object 431 and the second virtual object 433 are objects corresponding to real objects in the real world, and the third virtual object 435 is an object for an artificial reality service. For example, the virtual camera may be configured in the second position and/or the second direction identified based on the movement and/or rotation of the electronic device 101, and the second virtual image 430 may be acquired as a result of image-capturing of the virtual camera. When viewed in the second direction at the second position, the third virtual object 435 in the digital twin model may be located, for example, behind the first virtual object 431, and accordingly, only a part of the third virtual object 435 is included in the second virtual image 430, and the remaining part may be expressed as being covered by the first virtual object 431. For example, it is assumed that a reference point for referring to the position of the first virtual object 431 is located at a first position X1 in the second virtual image 430, and a reference point for referring to the position of the third virtual object 435 is located at a second position X2 in the second virtual image 430.

Referring to FIG. 4A and FIG. 4C, according to an embodiment, in operation 409, the electronic device 101 may display, on a second real image 440, the virtual object included in the second virtual image 430, for example, a third virtual object 445. As described above, the third virtual object 435 may be displayed, on the second real image 440, as an object for the artificial reality service. The second real image 440 may include a first real object 441 and a second real object 443. It is assumed that a reference point for referring to a position of the first real object 441 is located at a third position X3 in the second real image 440. If initial matching and/or tracking thereafter are accurately performed, the reference point of the first real object 441 and the reference point of the first virtual object 431 may be substantially at the same position. However, based on an error during the tracking and/or an error in the digital twin model itself, the reference point of the first real object 441 and the reference point of the first virtual object 431 may be located at different positions. Due to such mismatch, when the third virtual object 445 is displayed on the second real image 440, the third virtual object 445 may be expressed as not being harmonized with a surrounding real object (e.g., the first real object 441). For example, in FIG. 4C, the third virtual object 445 may be expressed as being separated from the first real object 441 by a certain distance d. In the second virtual image 430, the third virtual object 435 may have the same shape as a part of a whale shape by being covered by the first virtual object 431. Accordingly, the right outline of the third virtual object 435 may have a partial shape (e.g., a straight-line shape) of the left outline of the first virtual object 431. However, when the third virtual object 445 is displayed such that the reference point is located at the position X2 in the second real image 440, the third virtual object 445 having the shape of a whale with its right side cut off may be expressed as being separated from the first real object 441 by the certain distance d, so that an unnatural artificial reality service may be provided. In particular, if the third virtual object 435 is an object attached to the first virtual object 431 or is covered by the first virtual object 431, the unnaturalness of the artificial reality service may be highlighted. If an error occurs due to mismatch between a virtual image (e.g., the virtual image 430) and a real image (e.g., the real image 440) as described above, the electronic device 101 according to an embodiment may provide a natural artificial reality service by correcting the virtual image (or generating a new virtual image). That is, a virtual object that best fits an actual external image of the real world captured by the electronic device can be provided. Accordingly, the immersive experience of an artificial reality service can be improved.

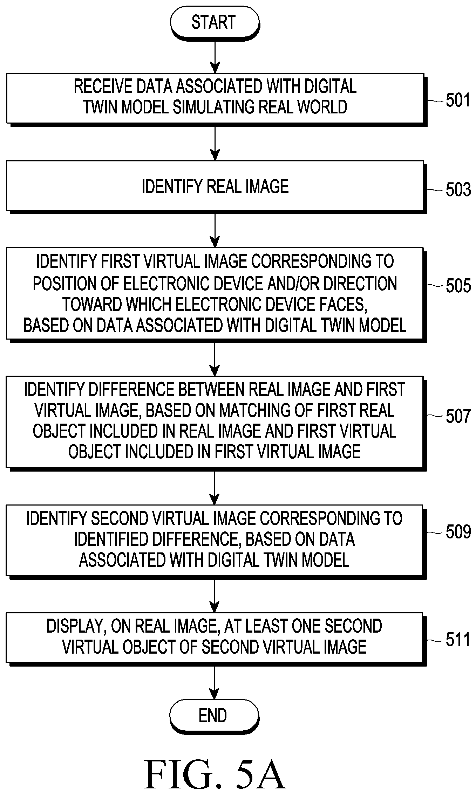

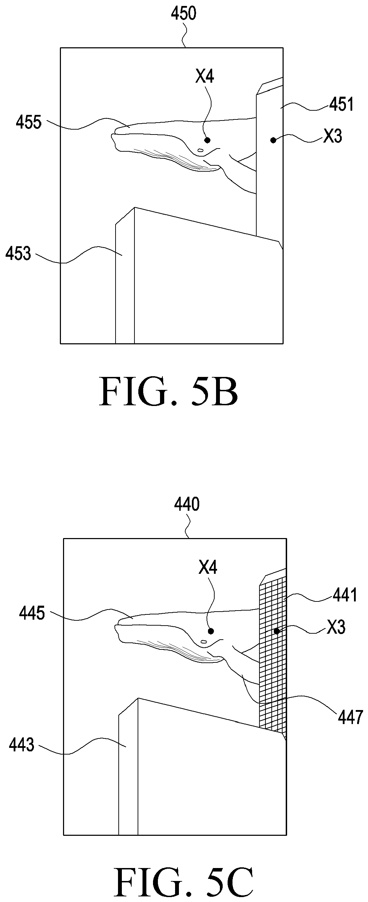

FIG. 5A is a flowchart illustrating an operation method of the electronic device according to an embodiment. The embodiment of FIG. 5A will be described with reference to FIG. 5B and FIG. 5C. FIG. 5B is a diagram of a virtual image generated according to an embodiment. FIG. 5C is a diagram of a real image reflecting the generated virtual object according to an embodiment.

Referring to FIG. 5A, according to an embodiment, in operation 501, the electronic device 101 (e.g., its processor 120), may receive data associated with a digital twin model simulating the real world. In operation 503, the electronic device 101 may identify a real image. In operation 505, the electronic device 101 may identify, based on the data associated with the digital twin model, a first virtual image corresponding to a position of the electronic device 101 and/or a direction toward which the electronic device 101 faces. In operation 507, the electronic device 101 may identify a difference between the real image and the first virtual image, based on matching of a first real object included in the real image and a first virtual object included in the first virtual image. For example, it is assumed that the electronic device 101 identifies the virtual image 430 and the real image 440 as in FIG. 4C. As described above, the real image 440 and the virtual image 430 are not matched, and therefore there may be a difference. The electronic device 101 may identify the difference between the two images, and an embodiment for identifying the difference will be described later. For example, the difference may comprise a difference in a position and/or a difference in a direction.

According to an embodiment, in operation 509, the electronic device 101 may identify a second virtual image corresponding to the identified difference, based on the data associated with the digital twin model. For example, according to the identified difference, the virtual image corresponding to the real image may be identified. For example, a position and/or direction of a virtual camera may be newly configured according to the identified difference, and a virtual image captured by the virtual camera may be identified. The identifying of the virtual image described above will be described later. For example, the electronic device 101 may acquire a second virtual image 450 corresponding to the identified difference, as shown in FIG. 5B. The second virtual image 450 may include virtual objects 451, 453, and 455. A reference point of the virtual object 451 of the second virtual image 450 corresponding to the difference may be located at X3, and a reference point of the virtual object 455 may be located at X4. The second virtual image 450 has been generated based on the difference, and accordingly, the reference point of the virtual object 451 of the second virtual image 450 may be located at substantially the same position X3 as the reference point of the first real object 441 of the real image 440.

Referring back to FIG. 5A, in operation 511, the electronic device 101 may display, on the real image, at least one virtual object of the second virtual image. For example, referring to FIG. 5C, the electronic device 101 may display a virtual object 447 on the real image 440. The virtual object 447 may be displayed at the position of X4 where the reference point of the virtual object 455 is located. Accordingly, the virtual object 455 may be expressed as being in contact with the first real object 441, and a natural artificial reality service, in which the virtual object 445 appears to be covered by the first real object 441, may be provided.

As described above, the electronic device 101 may display the virtual object on the real image, based on the digital twin model. Alternatively, the electronic device 101 may place the virtual object regardless of surrounding geographic features and/or plane information. Alternatively, the electronic device 101 may place the virtual object on a plane recognized on the real image.

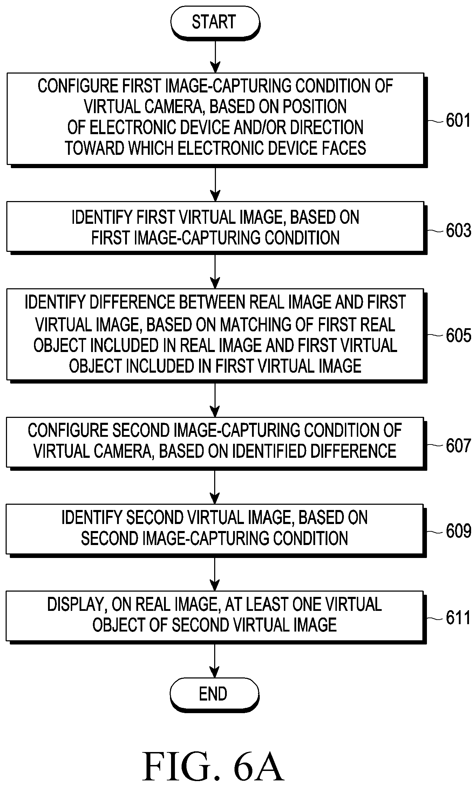

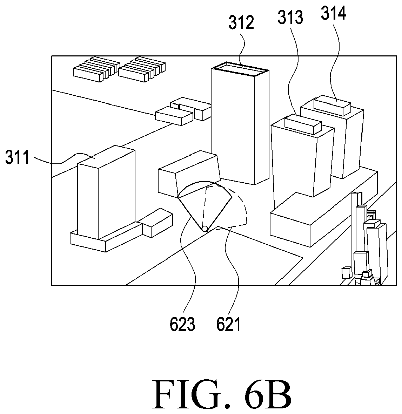

FIG. 6A is a flowchart illustrating an operation method of the electronic device according to an embodiment. The embodiment of FIG. 6A will be described with reference to FIG. 6B. FIG. 6B is a diagram illustrating a virtual camera in a digital twin model according to an embodiment.

According to an embodiment, in operation 601, the electronic device 101 (e.g., its processor 120) may configure a first image-capturing condition of the virtual camera, based on a position of the electronic device 101 and/or a direction toward which the electronic device 101 faces. In operation 603, the electronic device 101 may identify (or generate) a first virtual image, based on the first image-capturing condition. The image-capturing condition of the virtual camera may include, for example, a position, an image-capturing direction, and/or a field of view of the virtual camera in the digital twin model, but is not limited thereto. The first image-capturing condition may be configured based on a position and/or direction of the electronic device 101 in the real world. For example, based on the position of the electronic device 101 in the real world, the position of the virtual camera in the digital twin model may be configured. For example, the image-capturing direction of the virtual camera may be configured based on the direction (e.g., the direction toward which the camera module 180 faces) of the electronic device 101 in the real world. The field of view (FOV) of the virtual camera may be configured to be larger than, for example, the field of view of the camera module 180, but is not limited and may be configured to be smaller or the same. In an example, the field of view of the virtual camera may be configured to be A times larger than the field of view of the camera module 180. Here, the angle of view of the virtual camera may be configured based on an allowable system angular error (sAErr) range and/or an allowable system positional error (sPErr) range for recognition of a direction toward which the electronic device 101 faces. The allowable angular error range may be configured to be, for example, from a minimum angular error value ( $\overline{sAErr}_{min}^{j}$ ) to a maximum angular error value

( $sAErr_{max}^{j}$ ), where j denotes three dimensions of x, y, and z axes. For example, if the allowable angular error range is relatively large, A may be configured to be relatively large, but there is no restriction. The allowable positional error range may be configured to be, for example, from a minimum positional error value ( $sPErr_{min}^{i}$ ) to a maximum positional error value ( $sPErr_{max}^{i}$ ), where j denotes two dimensions of x and z axes. For example, referring to FIG. 6B, the electronic device 101 may generate the first virtual image by performing image-capturing by directing the virtual camera in a first direction 621 at a first position defined in the digital twin model. Here, the first direction 621 may be expressed as, for example, a two-dimensional angle (azimuth and pitch), but is not limited thereto. The generating of the virtual image by image-capturing by the virtual camera in the digital twin model may be performed based on projection on the three-dimensional digital twin model, but a scheme of generating a virtual image has no restriction.

According to an embodiment, in operation 605, the electronic device 101 may identify a difference between the real image and the first virtual image, based on matching of a first real object included in the real image and a first virtual object included in the first virtual image. For example, as described with reference to the virtual image 430 of FIG. 4B and the real image 440 of FIG. 4C, the first virtual object 431 of the virtual image 430 and the first real object 441 of the real image 440 may not be matched. The electronic device 101 may perform matching between the first real object included in the real image and the first virtual object included in the first virtual image. Matching in this case may refer to, for example, matching between a foreground image generated corresponding to the real image and the virtual object of the virtual image. The electronic device 101 may identify, based on a matching result, the difference between the two images, and an embodiment of identifying the difference between the two images will be described later. For example, the difference between the two images may be expressed by two-dimensional coordinates (or the number of pixels) on a plane, but there is no restriction on an expression scheme thereof.

According to an embodiment, in operation 607, the electronic device 101 may configure a second image-capturing condition of the virtual camera, based on the identified difference. The electronic device 101 may identify an adjustment level of an image-capturing direction of the virtual camera, based on the identified difference. For example, an azimuth adjustment level (ΔAzimuth) of the virtual camera may be identified based on the horizontal difference ($X_{origin}$ - $X_{est}$) between the two images, and this may be the same as Equation 1.

$$[Equation\ 1]$$
$$\Delta Azimuth \approx \arctan\left(\frac{X_{origin}-X_{est}}{focalLength}\right)$$

$X_{origin}$ may refer to, for example, the horizontal axis coordinate of a reference point in the real image, and $X_{est}$ may refer to, for example, the horizontal axis coordinate of a reference point in the virtual image. The dimension of the horizontal difference ($X_{origin}$ - $X_{est}$) may be, for example, the number of pixels, but is not limited thereto. focalLength may be a camera focal length.

For example, a pitch adjustment level (ΔPitch) of the virtual camera may be identified based on the vertical difference ($Y_{origin}$ - $Y_{est}$) between the two images, and this may be the same as Equation 2.

$$[Equation\ 2]$$
$$\Delta Pitch \approx \arctan\left(\frac{Y_{origin}-Y_{est}}{focalLength}\right)$$

$Y_{origin}$ may refer to, for example, the vertical axis coordinate of the reference point in the real image, and $Y_{est}$ may refer to, for example, the vertical axis coordinate of the reference point in the virtual image. The dimension of the vertical difference ($Y_{origin}$ - $Y_{est}$) may be, for example, the number of pixels, but is not limited thereto. The electronic device 101 may adjust an image-capturing direction of the virtual camera, based on an image-capturing direction adjustment level (e.g., an azimuth adjustment level (ΔAzimuth) and a pitch adjustment level (ΔPitch)) of the virtual camera, which is identified based on the difference between the images. For example, as shown in FIG. 6B, the electronic device 101 may identify a second direction 623 by applying the image-capturing direction adjustment level (e.g., an azimuth adjustment level (ΔAzimuth) and a pitch adjustment level (ΔPitch)) to the first direction 621.

According to an embodiment, in operation 609, the electronic device 101 may identify the second virtual image, based on the second image-capturing condition. In operation 611, the electronic device 101 may display, on the real image, at least one second virtual object of the second virtual image. The second image-capturing condition may include, for example, the second direction 623 identified by applying the image-capturing direction adjustment level (e.g., an azimuth adjustment level (ΔAzimuth) and a pitch adjustment level (ΔPitch)) to the first direction 621. Accordingly, for example, the virtual image 450 described with reference to FIG. 5B may be acquired. As described with reference to FIG. 5B, the first virtual object 451 in the virtual image 450 may be matched with the first real object 441 in the real image 440, and accordingly, the third virtual object 455 for the artificial reality service in the virtual image 450 may also be expressed as substantially being in contact with the first real object 441. Accordingly, an effect, such that another part of the third virtual object 455 is covered by the first real object 441, may be expressed. By means of this, the immersive experience of an artificial reality service is improved.

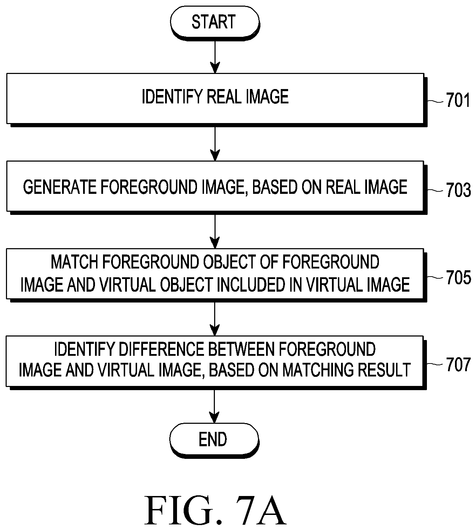

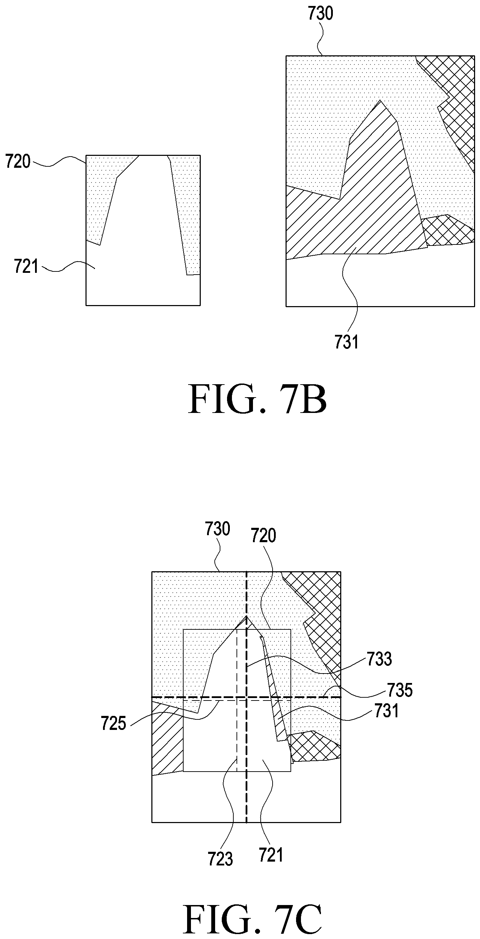

FIG. 7A is a flowchart illustrating an operation method of the electronic device according to an embodiment. The embodiment of FIG. 7A will be described with reference to FIG. 7B and FIG. 7C. FIG. 7B is a diagram of a foreground image and a virtual image according to an embodiment. FIG. 7C is a diagram illustrating a difference between the foreground image and the virtual image according to an embodiment.

According to an embodiment, in operation 701, the electronic device 101 (e.g., its processor 120) may identify a real image. In operation 703, the electronic device 101 may generate a foreground image, based on the real image. In an embodiment, the electronic device 101 may use a trained labeling algorithm, such as image pixel classification (semantic segmentation), to extract a feature point corresponding to a real object (e.g., a building) in the real image. For example, the electronic device 101 may generate the foreground image by using an untrained image segmentation technique (e.g., the technique may be a graph cut algorithm, but is not limited thereto). The graph cut algorithm may include, for example, an algorithm by which an area outside a configured area of interest and pixels in an area having a similar characteristic to pixels in the corresponding area may be classified as the background, and the rest may be classified as the foreground. Background/foreground may be defined based on a user's input. The electronic device 101 may generate a foreground image, based on various schemes. For example, as shown in FIG. 7B, a foreground image 720 may include a foreground object 721. The foreground image 720 may be, for example, a binary image in which each of the foreground object 721 and the rest has a different value, but there is no restriction on an expression scheme thereof. In an example, the electronic device 101 may generate the foreground image by using a mask generated based on a virtual image. A scheme of generating the foreground image based on a mask will be described later. The electronic device 101 may identify a virtual image 730 as shown in FIG. 7B. As described above, the electronic device 101 may identify the virtual image 730, based on image-capturing by a virtual camera in the digital twin model, but is not limited thereto. The virtual image 730 may include a virtual object 731. According to an embodiment, the virtual image 730 may be larger than the real image 720, which may be caused by configuring a field of view of the virtual camera to be larger (e.g., to be A times larger) than a field of view of the real camera module 180, but there is no restriction on a size relationship between the two images.

Referring to FIG. 7A and FIG. 7C, according to an embodiment, in operation 705, the electronic device 101 may match the foreground object 721 of the foreground image 720 and the virtual object 731 of the virtual image 730. For example, the electronic device 101 may match the foreground object 721 and the virtual object 731, based on a template matching algorithm, but there is no restriction on a matching scheme thereof. In operation 707, the electronic device 101 may identify a difference between the foreground image 720 and the virtual image 730, based on a matching result. For example, a difference between a reference line 723 of the foreground image 720 and a reference line 733 of the virtual image 730 may be identified as a horizontal difference (e.g., a horizontal difference ($X_{origin} - X_{est}$)) between the images, and a unit thereof may be the number of pixels, but is not limited. In the above-described manner, a vertical difference (e.g., a vertical difference ($Y_{origin} - Y_{est}$)) may also be identified based on the difference between the reference lines 725 and 735. In addition, as described above, ΔAzimuth may be identified based on the horizontal difference ($X_{origin} - X_{est}$) according to Equation 1, and ΔPitch may be identified based on the vertical difference ($Y_{origin} - Y_{est}$) according to Equation 2. Based on ΔAzimuth and ΔPitch, an image-capturing direction of the virtual camera may be adjusted.

For example, during the matching of the foreground image 720 and the virtual image 730, a feature point of the foreground image 720 may be used, and an edge and/or corner detection scheme may be used for feature point extraction, but there is no restriction on the feature point extraction. For the feature point extraction, a binary-based edge and/or corner detection scheme may be used, or an RGB color-based edge and/or corner detection scheme may be used, and this may be determined according to whether the virtual image 730 is expressible in RGB color. If the digital twin model is implemented to include texture information, the virtual image 730 may be expressed in RGB color.

For example, the difference between the two images may be identified based on a positional difference of feature points. For example, feature points may be grouped for each geographic feature, and the difference between the images may be identified based on a horizontal/vertical difference between respective groups. If the camera of the electronic device 101 is a 3D camera (e.g., a depth camera), the difference may be expressed in 3D.

The electronic device 101 may perform a correction described above if a virtual object for an artificial reality service is included in a virtual image. The electronic device 101 may perform a correction described above if a ratio of virtual objects in a virtual image is greater than or equal to a designated ratio. The electronic device 101 may perform a correction described above if a ratio of foreground objects in a real image is greater than or equal to a designated ratio. The electronic device 101 may perform a correction described above if a difference between a foreground image and a virtual image is less than or equal to a threshold difference. The electronic device 101 may perform a correction described above if accumulated correction values (angular and/or positional correction value) are within an allowable range. The described conditions for correction are illustrative and are not limited, and conditions for correction may not be configured.

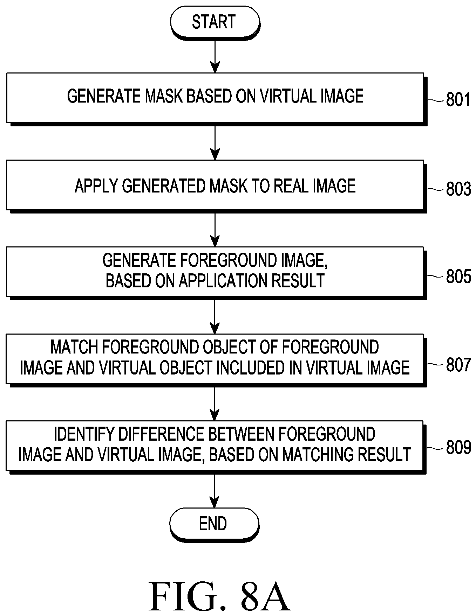

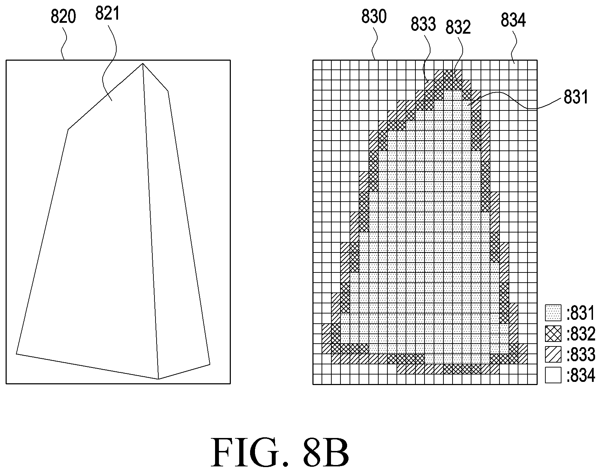

FIG. 8A is a flowchart illustrating an operation method of the electronic device according to an embodiment. The embodiment of FIG. 8A will be described with reference to FIG. 8B. FIG. 8B is a diagram illustrating a virtual image and a mask according to an embodiment.

Referring to FIG. 8A and 8B, according to an embodiment, in operation 801, the electronic device 101 (e.g., its processor 120) may generate a mask 830, based on a virtual image 820. For example, the electronic device 101 may generate a mask obtained by masking pixels of a virtual object 821 of the virtual image 820. For example, the electronic device 101 may generate the mask 830 including multiple areas 831, 832, 833, and 834 as shown in FIG. 8B, based on the pixels of the virtual object 821 of the virtual image 820. A first area 831 of the mask 830 may be an area that is certainly a foreground object, a second area 832 may be an area that is highly likely to be the foreground object, a third area 833 may be an area that is highly likely to be a background object, and a fourth area 834 may be an area that is highly likely to be the background object. For example, the first area 831 and the second area 832 may be pixels of the virtual object 821. The electronic device 101 may identify the first area 831 by excluding a designated number of pixels from the pixels of the virtual object 821 in the inward direction. For example, the electronic device 101 may identify the number of pixels to be excluded in the inward direction, based on an allowable error range of the digital twin model, for example, an allowable positional error range (mPErr) and/or an allowable angular error range (mAErr). The allowable positional error range (mPErr) may be configured to be, for example, from a minimum value ($mPErr_{min}^{i}$) to a maximum value ($mPErr_{max}^{i}$), and i may refer to two-dimensional x and z axes. The allowable angular error range (mAErr) may be configured to be, for example, from a minimum value ($mAErr_{min}^{j}$) to a maximum value ($mAErr_{max}^{j}$), and i may refer to three-dimensional x, y, and z axes. For example, if a maximum allowable angular error angle of the horizontal direction in the allowable angular error range (mAErr) is θ, a maximum number $P_x$ of pixels that are not matched due to the field of view of the virtual camera may be expressed as in Equation 3.

$$[\text{Equation 3}]$$
$$P_x = f * tan\left(\frac{\theta}{2}\right), (\text{where}, f \text{ is a focal length})$$

As described above, when the maximum number $P_x$ of pixels is identified, the electronic device 101 may perform erosion with a filter (kernel) having a size of $P_x$ x $P_x$ so as to determine the first area 831. In addition, among the pixels of the virtual object 821, pixels other than those in the first area 831 may be identified to be the second area 832. The electronic device 101 may identify the third area 833 by performing expansion with the filter (kernel) having a size of $P_x$ x $P_x$. In addition, the remaining area may be identified to be the fourth area 834.

Referring back to FIG. 8A, in operation 803, the electronic device 101 may apply the mask 830 including the generated multiple areas 831, 832, 833, and 834 to the real image. In operation 805, the electronic device 101 may generate a foreground image based on the application result. For example, a graph cut algorithm based on the mask 830 including the multiple areas 831, 832, 833, and 834 may be applied, but there is no restriction on a scheme of applying the mask. Resources required for generating the foreground image by using the mask described above may be less than resources required for another scheme (e.g., an artificial intelligence model). In operation 807, the electronic device 101 may match the foreground object of the foreground image and the virtual object included in the virtual image. In operation 809, the electronic device 101 may identify a difference between the foreground image and the virtual image, based on a matching result. Since the matching in operation 807 and the identifying of the difference in operation 809 have been described above with reference to FIG. 7A, FIG. 7B, and FIG. 7C, detailed descriptions thereof will not be repeated here.

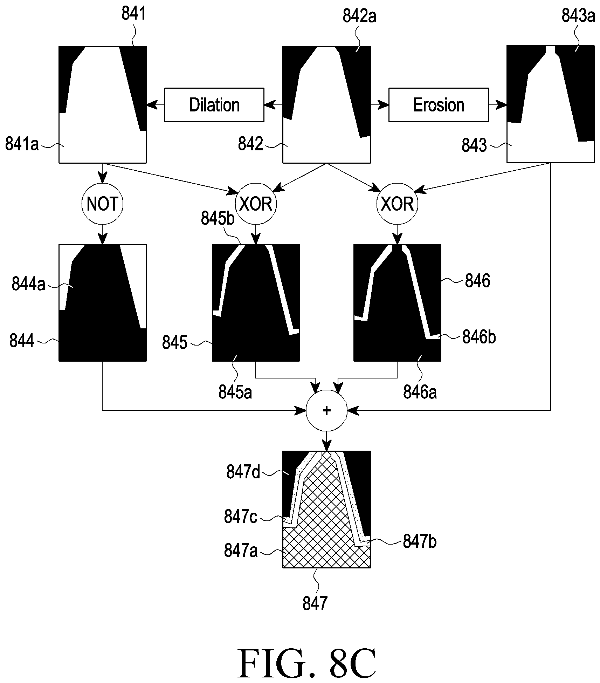

FIG. 8C is a diagram illustrating mask generation according to an embodiment.

According to an embodiment, the electronic device 101 (e.g., its processor 120) may acquire a virtual image 842. The virtual image 842 may include a virtual object 842a. The electronic device 101 may identify a dilated virtual image 841 by performing dilation. The dilated virtual image 841 may include a dilated virtual object 841a. The electronic device 101 may identify an eroded virtual image 843 by performing erosion. The eroded virtual image 843 may include an eroded virtual object 843a. For example, two axes among three axes of the allowable angular error range, for example, a y-axis (azimuth (yaw) angle) and an x-axis (pitch angle), may be used for mask generation. If the maximum allowable error range ( $sAErr_{max}^{y}$ ) of the y-axis (azimuth angle) is A, the number (nPixels$_x$) of pixels according to the horizontal FoV ($\theta_{horizontal}$) may be a product of L$_x$ and tan(A), and L$_x$ may be $\dfrac{w}{2tan\,(\theta_{hotizontal}/2)}$ . Similarly, if the maximum allowable error range ( $sAErr_{max}^{x}$ ) of the x-axis (pitch angle) is P, the number (nPixels$_y$) of pixels according to the vertical FoV ($\theta_{vertical}$) may be a product of L$_y$ and tan (P), and L$_y$ may be $\dfrac{h}{2tan\,(\theta_{vertical}/2)}$ . Accordingly, an allowable horizontal pixel displacement range may be ±nPixels$_x$, and an allowable vertical pixel displacement range may be ±nPixels$_y$. A kernel having a size of 3 x (2 * nPixels$_x$ + 1) and a kernel having a size of (2 * nPixels$_y$ + 1) x 3 may be generated from the both allowable pixel displacement ranges, respectively, and mask generation may be performed based on the kernels. If nPixels$_x$ is 3 and nPixels$_y$ is 2, the kernels (kernel$_x$ and kernel$_y$) corresponding to both directions may be equal to Equations 4-1 and 4-2.

[Equation 4-1]

$$kernel_x = \begin{bmatrix} 0 & 0 & 0 & 0 & 0 & 0 & 0 \\ 1 & 1 & 1 & 1 & 1 & 1 & 1 \\ 0 & 0 & 0 & 0 & 0 & 0 & 0 \end{bmatrix}$$

[Equation 4-2]

$$kernel_y = \begin{bmatrix} 0 & 1 & 0 \\ 0 & 1 & 0 \\ 0 & 1 & 0 \\ 0 & 1 & 0 \\ 0 & 1 & 0 \end{bmatrix}$$

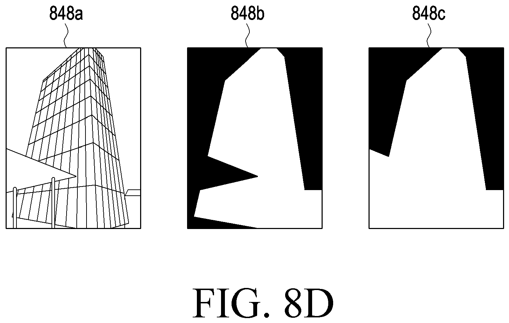

The electronic device 101 may acquire the eroded virtual image 843 and the dilated virtual image 841 by using the generated kernels. The electronic device 101 may identify an image 844 by inverting (NOT) the dilated virtual image 841. The image 844 may include an inverted object 844a. The electronic device 101 may acquire an image 845 by performing an XOR operation on the dilated virtual image 841 and the virtual image 842. The image 845 may include areas 845a and 845b. For example, the area 845b may correspond to a difference between the dilated virtual object 841a and the virtual object 842a. The electronic device 101 may acquire an image 846 by performing an XOR operation on the eroded virtual image 843 and the virtual image 842. The image 846 may include areas 846a and 846b. For example, the area 846b may correspond to a difference between the eroded virtual object 843a and the virtual object 842a. The electronic device 101 may identify a mask 847 by summing (+) the images 844, 845, and 846. The mask 847 may include areas 847a, 847b, 847c, and 847d. The area 847a may correspond to the area 846a, the area 847b may correspond to the area 846b, the area 847c may correspond to the area 845b, and the remaining area may correspond to the area 847d. As described above, the mask 847 is applied to the real image so that the foreground image may be acquired. FIG. 8D illustrates images according to embodiments. Referring to FIG. 8D, based on a real image 848a, a foreground image 848b to which a graph cut algorithm without using the mask 847 is applied, and a foreground image 848c to which a graph cut algorithm using the mask 847 is applied are illustrated. As illustrated in FIG. 8D, it may be identified that the foreground object is successfully distinguished in the both foreground images 848b and 848c.

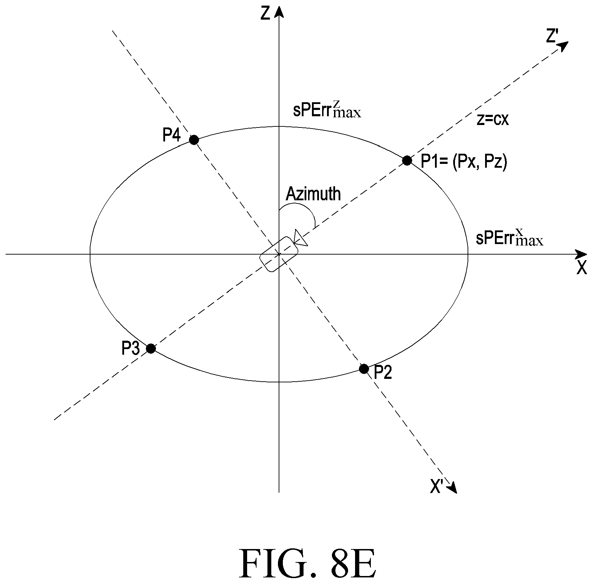

FIG. 8E is a diagram illustrating a maximum allowable positional error range according to an embodiment.

According to an embodiment, the electronic device 101 may generate a mask, based on a maximum allowable angular error range ( $sAErr_{max}^{I}$ ). If an allowable range for the maximum angular error ( $sAErr_{max}^{j}$ ) is not defined, the electronic device 101 may generate a mask, based on a maximum allowable positional error range ( $sPErr_{max}^{I}$ ). For example, if a position recognized by a system for position recognition is configured to be an origin of FIG. 8E, a relationship between an x-axis component ( $sPErr_{max}^{x}$ ) and a z-axis component ( $sPErr_{max}^{z}$ ) of the maximum allowable positional error range ( $sPErr_{max}^{I}$ ) may be expressed as Equation 5.

[Equation 5]

$$\frac{x^2}{sPErr_{max}^{x}{}^2} + \frac{z^2}{sPErr_{max}^{z}{}^2} = 1$$

In this case, a recognized y-axis direction (azimuth) may be defined as a z'-axis, a direction perpendicular to the z'-axis on the x-y plane may be defined as an x'-axis, and an intersection of the z'-axis and an ellipse may be calculated according to Equation 6. c in Equation 6 may be a slope of a straight line at z=cx in FIG. 8E. In addition, for simplification of notation, $sPErr_{max}^{x}$ is denoted as a, and $sPErr_{max}^{z}$ is denoted as b.

[Equation 6]

$$\frac{x^2}{a^2} + \frac{cx^2}{b^2} = 1$$

Accordingly, the x-axis coordinate of the intersection may correspond to $P_x = \pm\frac{ab}{\sqrt{a^2c+b^2}}$ and $P_z = \pm c\frac{ab}{\sqrt{a^2c+b^2}}$.

c may be determined based on the z'-axis direction (azimuth direction), and accordingly, c in FIG. 8E may be arctan(90-Azimuth). Remaining intersections P2, P3, and P4 may be identified in the same manner.

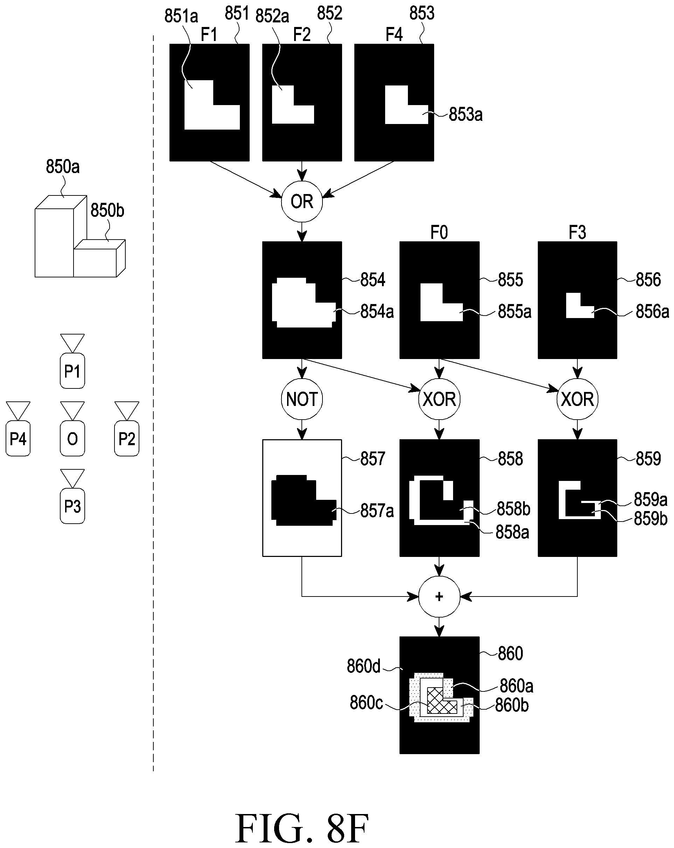

FIG. 8F is a diagram illustrating a procedure of generating a mask according to an embodiment.

According to an embodiment, the electronic device 101 may identify virtual image F0 855 captured from the origin. For example, the electronic device 101 may identify virtual image F0 855 by image-capturing digital twin models 850a and 850b by using a virtual camera. A virtual object 855a may be included in captured virtual image F0 855. For example, the electronic device 101 may identify virtual image F1 851, virtual image F2 852, virtual image F3 856, and virtual image F4 853 which are captured respectively at the points P1, P2, P3, and P4 determined as described in FIG. 8E. Virtual image F1 851, virtual image F2 852, virtual image F3 856, and virtual image F4 853 may include virtual objects 851a, 852a, 856a, and 853a, respectively.

According to an embodiment, the electronic device 101 may perform an OR operation on virtual image F1 851, virtual image F2 852, and virtual image F4 853, thereby identifying an image 854. The image 854 may include an object 854a, and the object 854a may be an OR operation result of the virtual objects 851a, 852a, and 853a. The electronic device 101 may identify an image 857 by inverting (NOT) the image 854, and the image 857 may include an object 857a. The electronic device 101 may identify an image 858 by performing an XOR operation on the image 854 and virtual image FO 855, and the image 858 may include areas 858a and 858b. The area 858b may correspond to a difference between the object 854a and the virtual object 855a, and the area 858a may correspond to the virtual object 855a. The electronic device 101 may identify an image 859 by performing an XOR operation on virtual image F3 856 and virtual image FO 855, and the image 859 may include areas 859a and 859b. The area 859a may correspond to a difference between the object 856a and the virtual object 855a, and the area 859b may correspond to the virtual object 856a. The electronic device 101 may identify a mask 860 by summing (+) the images 857, 858, and 859. The mask 860 may be divided into an area 860a that is highly likely to be background, an area 860b that is highly likely to be foreground, an area 860c that is certainly foreground, and an area 860d that is certainly background. As described above, the electronic device 101 may generate the mask 860, based on the maximum allowable positional error range ($sPErr_{max}^{I}$). The electronic device 101 may identify the foreground image by applying the mask 860 to the real image.

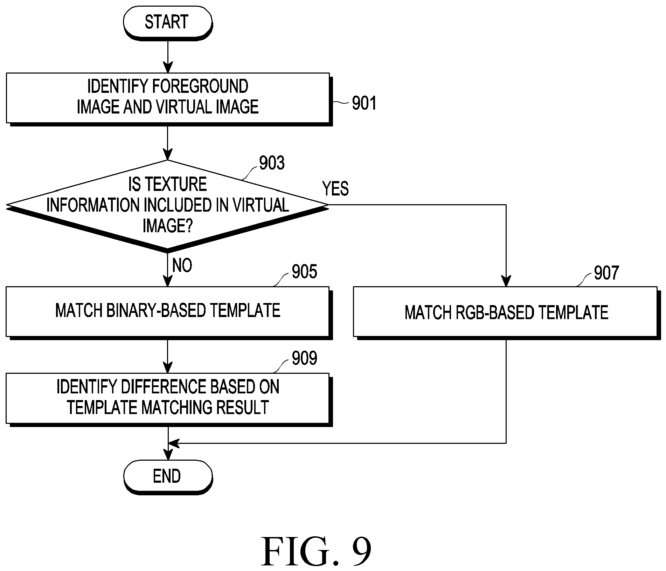

FIG. 9 illustrates a flowchart describing an operation method of the electronic device according to an embodiment.

According to an embodiment, in operation 901, the electronic device 101 (e.g., its processor 120) may identify a foreground image and a virtual image. For example, the electronic device 101 may acquire the foreground image, based on applying of a mask to a real image, or may acquire the foreground image by applying an algorithm for foreground acquisition to the real image. In operation 903, the electronic device 101 may identify whether texture information is included in the virtual image. The texture information may include, for example, a color and/or a pattern, but is not limited thereto. If the texture information is included, the virtual image may be expressed in RGB, but an expression format is not limited. If texture information is not included (NO in operation 903), the electronic device 101 may perform binary-based template matching in operation 905. If texture information is included (YES in operation 903), the electronic device 101 may perform RGB-based template matching in operation 907. In operation 909, the electronic device 101 may identify a difference based on a template matching result. For example, based on the template matching result, the difference between the foreground image and the virtual image may be identified, and the difference between the foreground image and the virtual image may be referred to as and/or processed as a difference between the real image and the virtual image. The electronic device 101 may newly identify the virtual image, based on the identified difference, and may display, on the real image, a virtual object included in the identified virtual image.

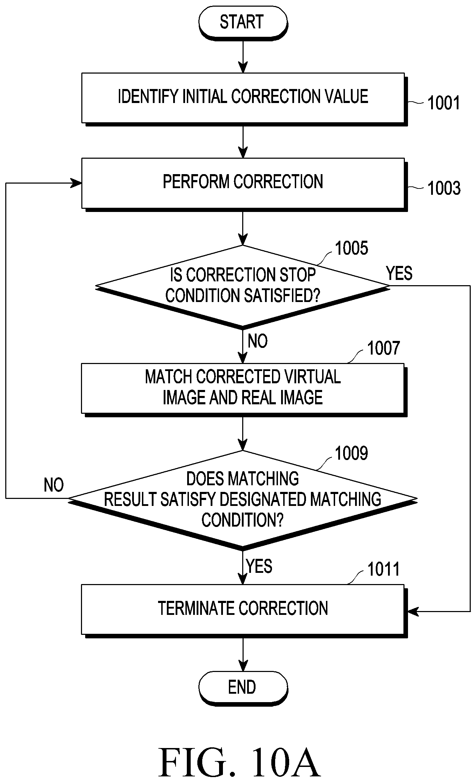

FIG. 10A illustrates a flowchart describing an operation method of the electronic device according to an embodiment.

According to an embodiment, in operation 1001, the electronic device 101 (e.g., its processor 120) may identify an initial correction value. In operation 1003, the electronic device 101 may perform a correction based on the identified initial correction value. For example, the electronic device 101 may perform a correction corresponding to vertical displacement, and accordingly, a height H of a virtual object in a virtual image and/or an object in a digital twin model may be adjusted. An adjustment level ($\Delta H$) of the height H may be D x $\Delta$Pitch. Here, D may be a distance to an object in the digital twin model and a virtual camera. Here, $\Delta$Pitch may be a value corresponding to a vertical difference identified according to Equation 2 described above. Accordingly, a scale for adjustment may be (H+$\Delta H$)/H, where H is be a height of a corresponding object. As described above, a size of a virtual object in the virtual image and/or an object in the digital twin model may be corrected.

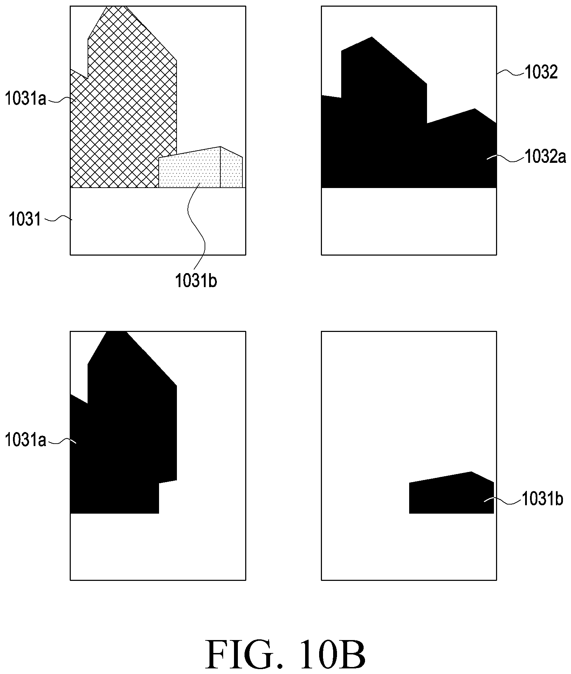

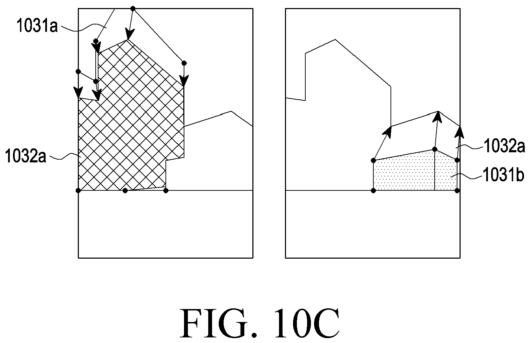

According to an embodiment, in operation 1005, the electronic device 101 may identify whether a correction stop condition is satisfied. The correction stop condition may include, for example, a condition in which the cumulative number of times of correction is equal to or greater than a threshold number of times of correction and/or a condition in which a cumulative correction degree is equal to or greater than a threshold correction degree, but is not limited thereto. If the correction stop condition is satisfied (YES in operation 1005), the electronic device 101 may terminate correction in operation 1011. If the correction stop condition is not satisfied (NO in operation 1005), the electronic device 101 may perform matching between the corrected virtual image and the real image. In operation 1009, the electronic device 101 may identify whether a matching result satisfies a designated matching condition. The matching condition may include, for example, a condition in which a matching score between the images is equal to or greater than a threshold score, and/or a condition in which a difference between matching scores of a previous step and a current step is equal to or less than a threshold difference, but the matching condition is not limited thereto. Here, the condition in which the difference between the matching scores of the previous step and the current step is equal to or less than the threshold difference may indicate that the matching scores converge to a certain value. If the matching condition is not satisfied (NO in operation 1009), the electronic device 101 may perform a correction again in operation 1003. Re-correction after initial correction may include, for example, correction on a size (e.g., vertical size) and/or a position of the object in the digital twin model, and this will be described with reference to FIG. 10B and FIG. 10C. Variable $\Omega$ for correction may include, for example, an x-coordinate of the object, a y-coordinate of the object, a height of the object, and/or a rotation angle with respect to the y-axis, but is not limited thereto. If the matching condition is satisfied (YES in operation 1009), the electronic device 101 may terminate correction in operation 1011.

FIG. 10B and FIG. 10C are diagrams illustrating adjustment of objects in the digital twin model according to an embodiment.

According to an embodiment, the electronic device 101 may identify a virtual image 1031 and a foreground image 1032. Since identifying of the virtual image 1031 and the foreground image 1032 has been described above, the description will not be repeated here. The virtual image 1031 may include a first virtual object 1031a and a second virtual object 1031b. The foreground image 1032 may include a foreground object 1032a. When compared to the foreground object 1032a, a vertical size of the first virtual object 1031a needs to be reduced, and a vertical size of the second virtual object 1031b needs to be increased. An index may be assigned to each object of the digital twin model, and the electronic device 101 may separate the virtual objects 1031a and 1031b of the virtual image 1031, based on the index.

According to an embodiment, the electronic device 101 may match each of the separated virtual objects 1031a and 1031b with the foreground image 1032. For example, the electronic device 101 may extract a feature point of an oriented and rotated BRIEF (ORB) among feature point extraction schemes, so as to perform brute-force matching to identify a motion vector (flow) of each feature point. Referring to FIG. 10C, motion vectors between feature points of the virtual objects 1031a and the foreground object 1032a and motion vectors between feature points of the virtual objects 1031b and the foreground object 1032a may be expressed as arrows.

For example, if a vertical component (or vertical motion vector) of a motion vector from the virtual object to the foreground object is identified to be a shrinking direction, the electronic device 101 may reduce the y-axis direction size of the corresponding object. Here, since the size of the virtual object is larger than the size of the foreground object, if the virtual object is configured based on a vector, the shrinking direction may indicate shrinking of the size of the object, but is not limited thereto. For example, as shown in FIG. 10C, if the direction of the motion vector is the shrinking direction, the electronic device 101 may reduce the y-axis direction size of the object in the digital twin model, which corresponds to the first virtual object 1031a. For example, if the vertical component (or vertical motion vector) of the motion vector from the virtual object to the foreground object is identified to be an expanding direction, the electronic device 101 may decrease the y-axis direction size of the corresponding object. Here, since the size of the virtual object is smaller than the size of the foreground object, if the virtual object is configured based on a vector, the expanding direction may indicate expansion of the size of the object, but is not limited thereto. For example, as shown in FIG. 10C, if the direction of the motion vector is the expanding direction, the electronic device 101 may decrease the y-axis direction size of the object in the digital twin model, which corresponds to the second virtual object 1031b. For example, if a horizontal component (or horizontal motion vector) of the motion vector from the virtual object to the foreground object is identified to be a shrinking direction, the electronic device 101 may reduce the x-z-axis direction size of the corresponding object. For example, if the horizontal component (or horizontal motion vector) of the motion vector from the virtual object to the foreground object is identified to be an expanding direction, the electronic device 101 may decrease the x-z-axis direction size of the corresponding object. For example, if the motion vector is directed in the horizontal direction and the sizes of both objects are substantially the same, the electronic device 101 may move the positions of the objects in the digital twin model.

For example, feature points may be expressed as two-dimensional coordinates (x, y), wherein coordinates before movement are referred to as FP1, and the coordinates after movement are referred to as FP2. Standard deviation

sig($X_1$) of an x-coordinate set $X_1 = \{p_1^{x1}, p_1^{x2}, ..., p_1^{xn}\}$ of $FP_1 = \{(p_1^{x1}, p_1^{y1}), (p_1^{x2}, p_1^{y2}), ..., (p_1^{xn}, p_1^{yn})\}$

may be calculated to be $\dfrac{\sum(p_1^{xi} - \overline{X_1})^2}{n-1}$, sig($X_2$) may be $\dfrac{\sum(p_2^{xi} - \overline{X_2})^2}{n-1}$, and n may be the number of feature points. Scaling levels of individual objects may be as follows. Here, distributions may be defined as follows.

$$\Delta sig_x = sig(\overline{X_2}) - sig(\overline{X_1}): \text{horizontal distribution difference}$$

$$\Delta sig_y = sig(Y_2) - sig(Y_1): \text{vertical distribution difference}$$

The electronic device 101 according to an embodiment may perform size adjustment of the object, as shown in Table 1. max($X_1$) may be a maximum value of set $X_1$, and min($X_1$) may be a minimum value of set $X_1$.

Table 1

| |
|---|
| 1) $\Delta sig_X > 0$ (if the virtual object is horizontally smaller than the foreground object (or real object)): The x,z size of the digital twin model is configured to be $1 + \dfrac{\Delta sig_x}{(\max(X_1) - \min(X_1))}$ times. |
| 2) $\Delta sig_X < 0$ (if the virtual object is horizontally larger than the foreground object (or real object)): The x,z size of the digital twin model is configured to be $1 + \dfrac{\Delta sig_x}{(\max(X_1) - \min(X_1))}$ times. |
| 3) $\Delta sig_y > 0$ (if the virtual object is vertically smaller than the foreground object (or real object)): The y size of the digital twin model is configured to be $1 + \dfrac{\Delta sig_y}{(\max(Y_1) - \min(Y_1))}$ times. |
| 4) $\Delta sig_y < 0$ (if the virtual object is vertically larger than the foreground object (or real object)): The y size of the digital twin model is configured to be $1 + \dfrac{\Delta sig_y}{(\max(Y_1) - \min(Y_1))}$ times. |

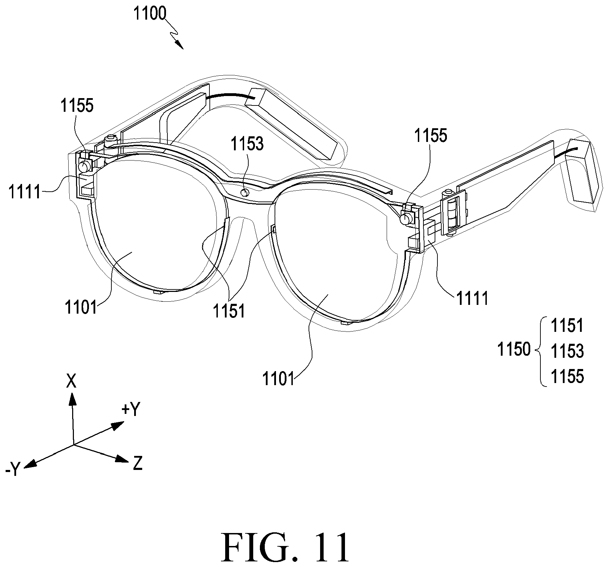

As described above, the electronic device 101 may adjust the size of the object in the digital twin model. FIG. 11 is a diagram of a wearable electronic device according to an embodiment.

Referring to FIG. 11, a wearable electronic device 1100 according to an embodiment of the disclosure may include at least one of an optical output module 1111, a display member 1101, and a camera module 1150.

According to an embodiment, the optical output module 1111 may include a light source enabling output of an image, and a lens configured to guide an image to the display member 1101. According to an embodiment of the disclosure, the optical output module 1111 may include at least one of a liquid crystal display (LCD), a digital mirror device (DMD), a liquid crystal on silicon (LCoS), an organic light emitting diode (OLED), or a micro light emitting diode (micro-LED).

**EP 4 394 722 A1**

According to an embodiment, the display member 1101 may include an optical waveguide. According to an embodiment of the disclosure, an output image of the optical output module 1111, which is incident to one end of the optical waveguide, may be propagated inside the optical waveguide so as to be provided to a user. According to an embodiment of the disclosure, the optical waveguide may include at least one of at least one diffractive element (e.g., a diffuse optical element (DOE) or a holographic optical element (HOE)) or a reflective element (e.g., a reflective mirror). For example, the optical waveguide may guide the output image of the optical output module 1111 to a user's eye by using at least one diffractive element or reflective element.

According to an embodiment of the disclosure, the camera module 1150 may capture a still image and/or a moving image. According to an embodiment, the camera module 1150 may be disposed within a lens frame and disposed around the display member 1101.

According to an embodiment of the disclosure, a first camera module 1151 may image-capture and/or recognize a trajectory of a user's eye (e.g., pupil or iris) or gaze. According to an embodiment of the disclosure, the first camera module 1151 may periodically or aperiodically transmit information (e.g., trajectory information) related to a trajectory of a user's eye or gaze to the processor (e.g., the 120 of FIG. 1).

According to an embodiment of the disclosure, a second camera module 1153 may capture an external image.

According to an embodiment of the disclosure, a third camera module 1155 may be used for hand detecting and tracking, and recognition of a gesture (e.g., hand motion) of a user. The third camera module 1155 according to an embodiment of the disclosure may be used for 3 degrees of freedom (3DoF), 6DoF head tracking, position (space or environment) recognition, and/or movement recognition. The second camera module 1153 may be used for hand detection and tracking, and recognition of a gesture of a user according to an embodiment of the disclosure. According to an embodiment of the disclosure, at least one of the first camera module 1151 to the third camera module 1155 may be replaced with a sensor module (e.g., a LiDAR sensor). For example, the sensor module may include at least one of a vertical cavity surface emitting laser (VCSEL), an infrared sensor, and/or a photodiode.

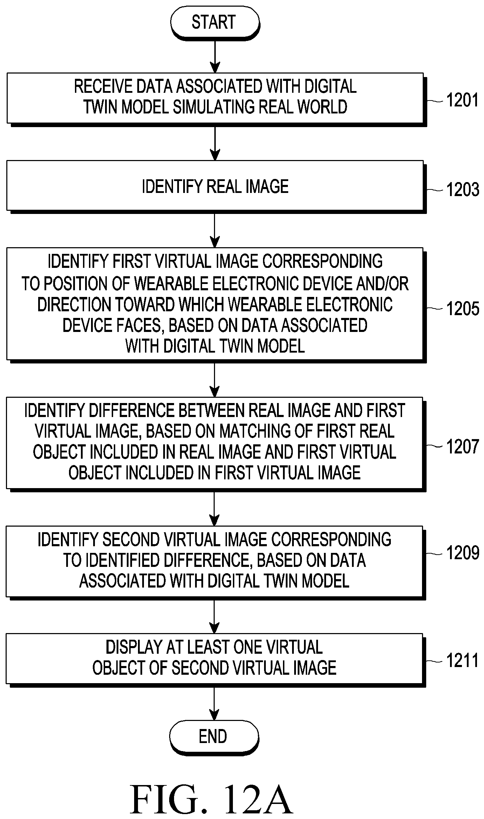

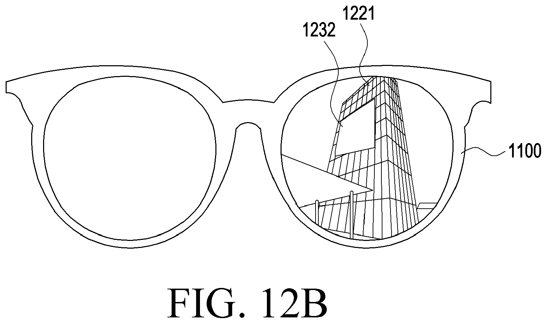

FIG. 12A is a flowchart illustrating an operation method of the electronic device according to an embodiment. The embodiment of FIG. 12A will be described with reference to FIG. 12B. FIG. 12B is a diagram illustrating a display operation by the wearable electronic device according to an embodiment.

According to an embodiment, in operation 1201, the wearable electronic device 1100 may receive data associated with a digital twin model simulating the real world. As described above, the wearable electronic device 1100 may receive data associated with a digital twin model identified based on position information. In operation 1203, the wearable electronic device 1100 may identify a real image. The wearable electronic device 1100 may not display a captured real image. For example, the wearable electronic device 1100 may capture a real foreground image by using a camera module 1150. In operation 1205, the wearable electronic device 1100 may identify, based on the data associated with the digital twin model, a first virtual image corresponding to a position of the wearable electronic device 1100 and/or a direction toward which the wearable electronic device 1100 faces. In operation 1207, the wearable electronic device 1100 may identify a difference between the real image and the first virtual image, based on matching of a first real object included in the real image and a first virtual object included in the first virtual image. In operation 1209, the wearable electronic device 1100 may identify a second virtual image corresponding to the identified difference, based on the data associated with the digital twin model. Since the aforementioned identifying of the difference and the identifying of the second virtual image based on the difference have been described above, detailed descriptions will not be repeated here.

According to an embodiment, in operation 1211, the wearable electronic device 1100 may display at least one virtual object of the second virtual image. For example, as shown in FIG. 12B, the wearable electronic device 1100 may display a virtual object 1232. A facility 1221 placed in the real world, for example, a building, may be observed by a user through a transparent member. Accordingly, the user may recognize as if the virtual object 1232 were attached to the facility 1221. As described above, the wearable electronic device 1100 does not display the real image, but may be used to determine an accurate position of the virtual object 1232.

By providing a more accurate location/direction recognition, the present disclosure can expand the scope of augmented reality services to provide users with a more diverse experience and improves the immersive experience of the users.

According to an embodiment, an electronic device 101 may include a display module 160, at least one communication module 190, at least one camera module 180, and at least one processor 120. The at least one processor 120 may be configured to receive, via the communication module, data associated with a digital twin model simulating the real world. The at least one processor 120 may be configured to identify an image captured by the at least one camera module 180. The at least one processor 120 may be configured to, based on the data associated with the digital twin model, identify a first virtual image corresponding to a position of the electronic device 101 and/or a direction toward which the electronic device 101 faces. The at least one processor 120 may be configured to identify a difference between the image and the first virtual image, based on matching of a first object included in the image and a first virtual object included in the first virtual image. The at least one processor 120 may be configured to, based on the data associated with the digital twin model, identify a second virtual image corresponding to the identified difference. The at least one processor 120 may be configured to control the display module 160 to display, on the image, at least one second virtual object of the second virtual image.

According to an embodiment, the at least one second virtual object may be placed on the first object of the image and/or may be placed to substantially contact the first obj ect.

According to an embodiment, as at least a part of the identifying of the first virtual image, the at least one processor 120 may be configured to, based on the position of the electronic device 101 and/or the direction toward which the electronic device 101 faces, identify a first position and/or a first direction in the digital twin model. As at least a part of the identifying of the first virtual image, the at least one processor 120 may be configured to identify the first virtual image, based on image-capturing of a virtual camera in the first direction at the first position in the digital twin model.

According to an embodiment, a field of view of the virtual camera may be configured based on a field of view of the at least one camera.

According to an embodiment, the at least one processor 120 may be further configured to identify the field of view of the virtual camera, based on a value, which is identified based on an allowable system positional error (sPErr) range associated with the position of the electronic device 101 and/or an allowable system angular error (sAErr) range associated with the direction toward which the electronic device 101 faces, and the field of view of the at least one camera.

According to an embodiment, as at least a part of the identifying of the second virtual image corresponding to the identified difference, the at least one processor 120 may be configured to identify a position adjustment level and/or a direction adjustment level corresponding to the difference. As at least a part of the identifying of the second virtual image corresponding to the identified difference, the at least one processor 120 may be configured to identify the second virtual image, based on image-capturing of the virtual camera, which is based on a second position and/or a second direction in the digital twin model identified based on the position adjustment level and/or the direction adjustment level.

According to an embodiment, as at least a part of the identifying of the second virtual image corresponding to the identified difference, the at least one processor 120 may be configured to identify a horizontal difference between the image and the first virtual image and a vertical difference between the image and the second virtual image. As at least a part of the identifying of the second virtual image corresponding to the identified difference, the at least one processor 120 may be configured to, based on the horizontal difference, identify a horizontal adjustment angle of the virtual camera as at least a part of the direction adjustment level. As at least a part of the identifying of the second virtual image corresponding to the identified difference, the at least one processor 120 may be configured to, based on the vertical difference, identify a vertical adjustment angle of the virtual camera as at least a part of the direction adjustment level.

According to an embodiment, as at least a part of the identifying of the difference between the image and the first virtual image, the at least one processor 120 may be configured to, based on the matching of the first object and the first virtual object, identify a foreground image corresponding to the image. As at least a part of the identifying of the difference between the image and the first virtual image, the at least one processor 120 may be configured to, based on the matching of the first object and the first virtual object, identify, as the difference between the image and the first virtual image, a difference between the foreground image and the first virtual image in a case where a foreground object corresponding to the first object included in the foreground image is matched with the first virtual object.

According to an embodiment, as at least a part of the identifying of the foreground image corresponding to the image, the at least one processor 120 may be configured to identify the foreground image, based on applying, to the image, an algorithm for detecting a foreground object.

According to an embodiment, as at least a part of the identifying of the foreground image corresponding to the image, the at least one processor 120 may be configured to identify a mask, based on the first virtual image. As at least a part of the identifying of the foreground image corresponding to the image, the at least one processor 120 may be configured to identify the foreground image, based on applying the mask to the image.

According to an embodiment, as at least a part of the identifying of the mask based on the first virtual image, the at least one processor 120 may be configured to identify the mask including a first area, a second area, a third area, and a fourth area, wherein the first area is identified by excluding a first number of pixels from pixels corresponding to the first virtual object in the inward direction, the second area is identified by excluding the first area from the pixels corresponding to the first virtual object, the third area is identified by extending a second number of pixels from the pixels corresponding to the first virtual object in the outward direction, and the fourth area is identified by excluding the first area, the second area, and the third area from the virtual image.

According to an embodiment, the first number and/or the second number may be identified based on an allowable angular error range of the digital twin model.

According to an embodiment, as at least a part of the identifying of the mask based on the first virtual image, the at least one processor 120 may be configured to identify multiple positions identified based on an allowable positional error range of the digital twin model. As at least a part of the identifying of the mask based on the first virtual image, the at least one processor 120 may be configured to identify multiple virtual images identified based on image-capturing of the virtual camera at the multiple positions. As at least a part of the identifying of the mask based on the first virtual image, the at least one processor 120 may be configured to identify the mask, based on the multiple virtual images and the first virtual image.

According to an embodiment, a vertical size of at least one third object included in the second virtual image corresponding to the at least one first virtual object may be different from a vertical size of the first virtual object.

According to an embodiment, the at least one processor 120 may be further configured to, based on a difference between the first object and at least one third object included in the second virtual image corresponding to the at least one first virtual image, correct an object of the digital twin model, which corresponds to the at least one third object.

According to an embodiment, as at least a part of the correcting of the object of the digital twin model, which corresponds to the at least one third object, the at least one processor 120 may be configured to correct the object of the digital twin model, which corresponds to the at least one third object, if a matching score between the first object and the at least one first virtual object is lower than a threshold matching score and/or a difference between the matching score and a matching score of a previous step exceeds a threshold difference.

According to an embodiment, if the cumulative number of times of correction is equal to or greater than a threshold number of times of correction and/or if a cumulative correction degree is equal to or greater than a threshold correction degree, correction may not be performed.

According to an embodiment, an operation method of an electronic device 101 may include receiving data associated with a digital twin model simulating the real world. The operation method of the electronic device 101 may include identifying an image captured by at least one camera module 180 of the electronic device 101. The operation method of the electronic device 101 may include, based on the data associated with the digital twin model, identifying a first virtual image corresponding to a position of the electronic device 101 and/or a direction toward which the electronic device 101 faces. The operation method of the electronic device 101 may include, based on matching of a first object included in the image and a first virtual object included in the first virtual image, identifying a difference between the image and the first virtual image. The operation method of the electronic device 101 may include, based on the data associated with the digital twin model, identifying a second virtual image corresponding to the identified difference. The operation method of the electronic device 101 may include displaying, on the image, at least one second virtual object of the second virtual image.

According to an embodiment, the at least one second virtual object may be placed on the first object of the image and/or may be placed to substantially contact the first obj ect.

According to an embodiment, the identifying of the first virtual image may include, based on the position of the electronic device 101 and/or the direction toward which the electronic device 101 faces, identifying a first position and/or a first direction in the digital twin model. The identifying of the first virtual image may include identifying the first virtual image, based on image-capturing of a virtual camera in the first direction at the first position in the digital twin model.

According to an embodiment, a field of view of the virtual camera may be configured based on a field of view of the at least one camera.

According to an embodiment, the operation method of the electronic device 101 may further include causing at least one processor 120 to identify the field of view of the virtual camera, based on a value, which is identified based on an allowable system positional error (sPErr) range associated with the position of the electronic device 101 and/or an allowable system angular error (sAErr) range associated with the direction toward which the electronic device 101 faces, and the field of view of the at least one camera.

According to an embodiment, the identifying of the second virtual image corresponding to the identified difference may include identifying a position adjustment level and/or a direction adjustment level corresponding to the difference. The identifying of the second virtual image corresponding to the identified difference may include identifying the second virtual image, based on image-capturing of the virtual camera, which is based on a second position and/or a second direction in the digital twin model identified based on the position adjustment level and/or the direction adjustment level.

According to an embodiment, the identifying of the second virtual image corresponding to the identified difference may include causing the at least one processor 120 to identify a horizontal difference between the image and the first virtual image and a vertical difference between the image and the second virtual image. As at least a part of the identifying of the second virtual image corresponding to the identified difference, the at least one processor 120 may be configured to, based on the horizontal difference, identify a horizontal adjustment angle of the virtual camera as at least a part of the direction adjustment level. As at least a part of the identifying of the second virtual image corresponding to the identified difference, the at least one processor 120 may be configured to, based on the vertical difference, identify a vertical adjustment angle of the virtual camera as at least a part of the direction adjustment level.

According to an embodiment, the identifying of the difference between the image and the first virtual image may include, based on the matching of the first object and the first virtual object, identifying a foreground image corresponding to the image. The identifying of the difference between the image and the first virtual image may include, based on the matching of the first object and the first virtual object, identifying, as the difference between the image and the first virtual image, a difference between the foreground image and the first virtual image in a case where a foreground object corresponding to the first object included in the foreground image is matched with the first virtual object.

According to an embodiment, the identifying of the foreground image corresponding to the image may include identifying the foreground image, based on applying, to the image, an algorithm for detecting a foreground object.

According to an embodiment, the identifying of the foreground image corresponding to the image may include causing the at least one processor 120 to identify a mask, based on the first virtual image. The identifying of the foreground image corresponding to the image may include causing the at least one processor 120 to identify the foreground image, based on applying the mask to the image.

According to an embodiment, the identifying of the mask based on the first virtual image may include identifying the mask including a first area, a second area, a third area, and a fourth area, wherein the first area is identified by excluding a first number of pixels from pixels corresponding to the first virtual object in the inward direction, the second area is identified by excluding the first area from the pixels corresponding to the first virtual object, the third area is identified by extending a second number of pixels from the pixels corresponding to the first virtual object in the outward direction, and the fourth area is identified by excluding the first area, the second area, and the third area from the virtual image.

According to an embodiment, the first number and/or the second number may be identified based on an allowable angular error range of the digital twin model.

According to an embodiment, the identifying of the mask based on the first virtual image may include identifying multiple positions identified based on an allowable positional error range of the digital twin model. The identifying of the mask based on the first virtual image may include identifying multiple virtual images identified based on image-capturing of the virtual camera at the multiple positions. The identifying of the mask based on the first virtual image may include identifying the mask, based on the multiple virtual images and the first virtual image.

According to an embodiment, a vertical size of at least one third object included in the second virtual image corresponding to the at least one first virtual object may be different from a vertical size of the first virtual object.

According to an embodiment, the operation method of the electronic device 101 may include, based on a difference between the first object and at least one third object included in the second virtual image corresponding to the at least one first virtual image, correcting an object of the digital twin model, which corresponds to the at least one third object.

According to an embodiment, the correcting of the object of the digital twin model, which corresponds to the at least one third object, may include causing the at least one processor 120 to correct the object of the digital twin model, which corresponds to the at least one third object, if a matching score between the first object and the at least one first virtual object is lower than a threshold matching score and/or a difference between the matching score and a matching score of a previous step exceeds a threshold difference.

According to an embodiment, if the cumulative number of times of correction is equal to or greater than a threshold number of times of correction and/or if a cumulative correction degree is equal to or greater than a threshold correction degree, correction may not be performed.

According to an embodiment, a wearable electronic device 1100 may include an optical output module 1111, at least one communication module (not illustrated), at least one camera module 1150, and at least one processor (not illustrated). The at least one processor (not illustrated) may be configured to receive, via the communication module (not illustrated), data associated with a digital twin model simulating the real world. The at least one processor (not illustrated) may be configured to identify an image captured by the at least one camera module 1150. The at least one processor (not illustrated) may be configured to, based on the data associated with the digital twin model, identify a first virtual image corresponding to a position of the wearable electronic device 1100 and/or a direction toward which the wearable electronic device 1100 faces. The at least one processor (not illustrated) may be configured to identify a difference between the image and the first virtual image, based on matching of a first object included in the image and a first virtual object included in the first virtual image. The at least one processor (not illustrated) may be configured to, based on the data associated with the digital twin model, identify a second virtual image corresponding to the identified difference. The at least one processor (not illustrated) may be configured to control the optical output module 1111 to display at least one second virtual object of the second virtual image.

According to an embodiment, an operation method of a wearable electronic device 1100 may include receiving data associated with a digital twin model simulating the real world. The operation method of the wearable electronic device 1100 may include identifying an image captured by at least one camera module 1150 of the wearable electronic device 1100. The operation method of the wearable electronic device 1100 may include, based on the data associated with the digital twin model, identifying a first virtual image corresponding to a position of the wearable electronic device 1100 and/or a direction toward which the wearable electronic device 1100 faces. The operation method of the wearable electronic device 1100 may include, based on matching of a first object included in the image and a first virtual object included in the first virtual image, identifying a difference between the image and the first virtual image. The operation method of the wearable electronic device 1100 may include, based on the data associated with the digital twin model, identifying a second virtual image corresponding to the identified difference. The operation method of the wearable electronic device 1100 may include displaying at least one second virtual object of the second virtual image.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

**1.** An electronic device (101) comprising:

a display module (160);
at least one communication module (190);

at least one camera module (180); and
at least one processor (120),
wherein the at least one processor (120) is configured to:

through the communication module (190), receive (501) data associated with a digital twin model simulating the real world;
identify (503) an image (320) captured by the at least one camera module (180);
based on the data associated with the digital twin model, identify (505) a first virtual image (330) corresponding to a position of the electronic device (101) and/or a direction toward which the electronic device (101) faces;
identify (507) a difference between the image (320) and the first virtual image (330), based on matching of a first object (321) included in the image (320) and a first virtual object (331) included in the first virtual image (330);
based on the data associated with the digital twin model, identify (509) a second virtual image corresponding to the identified difference; and
control the display module (160) to display (511), on the image (320), at least one second virtual object (332) of the second virtual image.

2. The electronic device (101) of claim 1, wherein the at least one second virtual object (332) is placed on the first object (321) of the image (320) and/or is placed to substantially contact the first object (321).

3. The electronic device (101) of one of claims 1 and 2, wherein the at least one processor (120) is configured to, as at least a part of the identifying (505) of the first virtual image (330):

based on the position of the electronic device (101) and/or the direction toward which the electronic device (101) faces, identify a first position and/or a first direction in the digital twin model; and
identify the first virtual image (330), based on image-capturing of a virtual camera in the first direction at the first position in the digital twin model.

4. The electronic device (101) of one of claims 1 to 3, wherein a field of view of the virtual camera is configured based on a field of view of the at least one camera, wherein the at least one processor (120) is further configured to identify the field of view of the virtual camera, based on a value, which is identified based on an allowable system positional error, sPErr, range associated with the position of the electronic device (101) and/or an allowable system angular error, sAErr, range associated with the direction toward which the electronic device (101) faces, and the field of view of the at least one camera.

5. The electronic device (101) of one of claims 1 to 4, wherein the at least one processor (120) is configured to, as at least a part of the identifying (509) of the second virtual image corresponding to the identified difference:

identify a position adjustment level and/or a direction adjustment level corresponding to the difference and identify the second virtual image, based on image-capturing of the virtual camera, which is based on a second position and/or a second direction in the digital twin model identified based on the position adjustment level and/or the direction adjustment level; and/or
identify a horizontal difference between the image (320) and the first virtual image (330) and a vertical difference between the image (320) and the second virtual image and, based on the horizontal difference, identify a horizontal adjustment angle of the virtual camera as at least a part of the direction adjustment level and, based on the vertical difference, identify a vertical adjustment angle of the virtual camera as at least a part of the direction adjustment level.

6. The electronic device (101) of one of claims 1 to 5, wherein the at least one processor (120) is configured to, based on the matching of the first object (321) and the first virtual object (331), as at least a part of the identifying (507) of the difference between the image (320) and the first virtual image (330):

identify a foreground image corresponding to the image (320); and
identify, as the difference between the image (320) and the first virtual image (330), a difference between the foreground image and the first virtual image (330) in case that a foreground object corresponding to the first object (321) included in the foreground image is matched with the first virtual object (331).

7. The electronic device (101) of one of claims 1 to 6, wherein the at least one processor (120) is configured to, as at least a part of the identifying of the foreground image corresponding to the image (320), identify the foreground image, based on applying an algorithm for detecting a foreground object to the image (320).

8. The electronic device (101) of one of claims 1 to 7, wherein the at least one processor (120) is configured to, as at least a part of the identifying of the foreground image corresponding to the image (320):

   identify a mask, based on the first virtual image (330); and
   identify the foreground image, based on applying the mask to the image (320).

9. The electronic device (101) of one of claims 1 to 8, wherein the at least one processor (120) is configured to, as at least a part of the identifying of the mask based on the first virtual image (330), identify the mask comprising a first area, a second area, a third area, and a fourth area, and
   wherein the first area is identified by excluding a first number of pixels from pixels corresponding to the first virtual object (331) in the inward direction, the second area is identified by excluding the first area from the pixels corresponding to the first virtual object (331), the third area is identified by extending a second number of pixels from the pixels corresponding to the first virtual object (331) in the outward direction, and the fourth area is identified by excluding the first area, the second area, and the third area from the virtual image.

10. The electronic device (101) of one of claims 1 to 9, wherein the at least one processor (120) is configured to, as at least a part of the identifying of the mask based on the first virtual image (330):

    identify multiple positions identified based on an allowable positional error range of the digital twin model;
    identify multiple virtual images identified based on image-capturing of the virtual camera at the multiple positions; and
    identify the mask, based on the multiple virtual images and the first virtual image (330).

11. The electronic device (101) of one of claims 1 to 10, wherein the at least one processor (120) is further configured to, based on a difference between the first object (321) and at least one third object included in the second virtual image corresponding to the at least one first virtual object, correct an object of the digital twin model, which corresponds to the at least one third object.

12. The electronic device (101) of one of claims 1 to 11, wherein the at least one processor (120) is configured to, as at least a part of the correcting of the object of the digital twin model, which corresponds to the at least one third object, correct the object of the digital twin model, which corresponds to the at least one third object, in case that a matching score between the first object (321) and the at least one first virtual object (331) is lower than a threshold matching score and/or a difference between the matching score and a matching score of a previous step exceeds a threshold difference.

13. The electronic device (101) of one of claims 11 and 12, wherein the at least one processor (120) is further configured to not perform a correction in case that the cumulative number of times of correction is equal to or greater than a threshold number of times of correction and/or in case that a cumulative correction degree is equal to or greater than a threshold correction degree.

14. An operation method of an electronic device (101), the method comprising:

    receiving (501) data associated with a digital twin model simulating the real world;
    identifying (503) an image (320) captured by at least one camera module (180) of the electronic device (101);
    based on the data associated with the digital twin model, identifying (505) a first virtual image (330) corresponding to a position of the electronic device (101) and/or a direction toward which the electronic device (101) faces;
    based on matching of a first object (321) included in the image (320) and a first virtual object (331) included in the first virtual image (330), identifying (507) a difference between the image (320) and the first virtual image (330);
    based on the data associated with the digital twin model, identifying (509) a second virtual image corresponding to the identified difference; and
    displaying (511), on the image, at least one second virtual object (332) of the second virtual image.

15. The method of claim 14, wherein the electronic device (101) is a wearable electronic device (1100).

FIG. 1A

EP 4 394 722 A1

FIG. 1B

ELECTRONIC
DEVICE ~101

SERVER ~108

FIRST POSITION INFORMATION ~201

IDENTIFY FIRST DATA ASSOCIATED
WITH DIGITAL TWIN MODEL OF
FIRST AREA CORRESPONDING TO
FIRST POSITION INFORMATION ~203

FIRST DATA ~205

ACQUIRE FIRST REAL IMAGE ~207

IDENTIFY FIRST VIRTUAL IMAGE
CORRESPONDING TO SECOND
POSITION INFORMATION AND/OR
SECOND DIRECTION BY USING
PART OF FIRST DATA ~209

DISPLAY, ON FIRST REAL IMAGE,
VIRTUAL OBJECT INCLUDED
IN FIRST VIRTUAL IMAGE ~211

FIG. 2

FIG. 3C

FIG. 3D

FIG. 3E

START

RECEIVE DATA ASSOCIATED WITH DIGITAL
TWIN MODEL SIMULATING REAL WORLD — 401

IDENTIFY FIRST VIRTUAL IMAGE CORRESPONDING TO
FIRST POSITION AND/OR FIRST DIRECTION BY
USING FIRST PART OF RECEIVED DATA — 403

DISPLAY, ON FIRST REAL IMAGE, VIRTUAL OBJECT
INCLUDED IN FIRST VIRTUAL IMAGE — 405

IDENTIFY SECOND VIRTUAL IMAGE CORRESPONDING TO
SECOND POSITION AND/OR SECOND DIRECTION BY USING
SECOND PART OF RECEIVED DATA, BASED ON MOVEMENT
AND/OR ROTATION OF ELECTRONIC DEVICE — 407

DISPLAY, ON SECOND REAL IMAGE, VIRTUAL
OBJECT INCLUDED IN SECOND VIRTUAL IMAGE — 409

END

# FIG. 4A

430

X2

435

431

X1

433

# FIG. 4B

440

d

X2

445

441

X3

443

# FIG. 4C

START

| RECEIVE DATA ASSOCIATED WITH DIGITAL TWIN MODEL SIMULATING REAL WORLD | ~ 501 |

| IDENTIFY REAL IMAGE | ~ 503 |

| IDENTIFY FIRST VIRTUAL IMAGE CORRESPONDING TO POSITION OF ELECTRONIC DEVICE AND/OR DIRECTION TOWARD WHICH ELECTRONIC DEVICE FACES, BASED ON DATA ASSOCIATED WITH DIGITAL TWIN MODEL | ~ 505 |

| IDENTIFY DIFFERENCE BETWEEN REAL IMAGE AND FIRST VIRTUAL IMAGE, BASED ON MATCHING OF FIRST REAL OBJECT INCLUDED IN REAL IMAGE AND FIRST VIRTUAL OBJECT INCLUDED IN FIRST VIRTUAL IMAGE | ~ 507 |

| IDENTIFY SECOND VIRTUAL IMAGE CORRESPONDING TO IDENTIFIED DIFFERENCE, BASED ON DATA ASSOCIATED WITH DIGITAL TWIN MODEL | ~ 509 |

| DISPLAY, ON REAL IMAGE, AT LEAST ONE SECOND VIRTUAL OBJECT OF SECOND VIRTUAL IMAGE | ~ 511 |

END

# FIG. 5A

450

X4

451

455

X3

453

## FIG. 5B

440

X4

441

445

X3

447

443

## FIG. 5C

```
                    ┌─────────┐
                    │  START  │
                    └────┬────┘
                         ▼
   ┌────────────────────────────────────────────┐
   │ CONFIGURE FIRST IMAGE-CAPTURING CONDITION OF│
   │     VIRTUAL CAMERA, BASED ON POSITION       │──601
   │     OF ELECTRONIC DEVICE AND/OR DIRECTION    │
   │    TOWARD WHICH ELECTRONIC DEVICE FACES      │
   └────────────────────┬───────────────────────┘
                         ▼
   ┌────────────────────────────────────────────┐
   │     IDENTIFY FIRST VIRTUAL IMAGE, BASED ON  │──603
   │        FIRST IMAGE-CAPTURING CONDITION       │
   └────────────────────┬───────────────────────┘
                         ▼
   ┌────────────────────────────────────────────┐
   │ IDENTIFY DIFFERENCE BETWEEN REAL IMAGE AND   │
   │  FIRST VIRTUAL IMAGE, BASED ON MATCHING OF   │
   │   FIRST REAL OBJECT INCLUDED IN REAL IMAGE   │──605
   │     AND FIRST VIRTUAL OBJECT INCLUDED IN     │
   │            FIRST VIRTUAL IMAGE               │
   └────────────────────┬───────────────────────┘
                         ▼
   ┌────────────────────────────────────────────┐
   │ CONFIGURE SECOND IMAGE-CAPTURING CONDITION OF│──607
   │  VIRTUAL CAMERA, BASED ON IDENTIFIED DIFFERENCE│
   └────────────────────┬───────────────────────┘
                         ▼
   ┌────────────────────────────────────────────┐
   │    IDENTIFY SECOND VIRTUAL IMAGE, BASED ON  │──609
   │       SECOND IMAGE-CAPTURING CONDITION       │
   └────────────────────┬───────────────────────┘
                         ▼
   ┌────────────────────────────────────────────┐
   │   DISPLAY, ON REAL IMAGE, AT LEAST ONE       │──611
   │    VIRTUAL OBJECT OF SECOND VIRTUAL IMAGE    │
   └────────────────────┬───────────────────────┘
                         ▼
                    ┌─────────┐
                    │   END   │
                    └─────────┘
```

# FIG. 6A

FIG. 6B

START

IDENTIFY REAL IMAGE — 701

GENERATE FOREGROUND IMAGE, BASED ON REAL IMAGE — 703

MATCH FOREGROUND OBJECT OF FOREGROUND IMAGE AND VIRTUAL OBJECT INCLUDED IN VIRTUAL IMAGE — 705

IDENTIFY DIFFERENCE BETWEEN FOREGROUND IMAGE AND VIRTUAL IMAGE, BASED ON MATCHING RESULT — 707

END

# FIG. 7A

720

721

730

731

# FIG. 7B

730    720

733

735

731

725

723    721

# FIG. 7C

START

GENERATE MASK BASED ON VIRTUAL IMAGE — 801

APPLY GENERATED MASK TO REAL IMAGE — 803

GENERATE FOREGROUND IMAGE,
BASED ON APPLICATION RESULT — 805

MATCH FOREGROUND OBJECT OF FOREGROUND
IMAGE AND VIRTUAL OBJECT INCLUDED IN VIRTUAL IMAGE — 807

IDENTIFY DIFFERENCE BETWEEN FOREGROUND
IMAGE AND VIRTUAL IMAGE, BASED ON MATCHING RESULT — 809

END

# FIG. 8A

820 821 830 833 832 834 831

:831
:832
:833
:834

# FIG. 8B

FIG. 8C

848a

848b

848c

# FIG. 8D

FIG. 8E

FIG. 8F

START

IDENTIFY FOREGROUND
IMAGE AND VIRTUAL IMAGE ⟋ 901

903

IS TEXTURE
INFORMATION INCLUDED IN VIRTUAL
IMAGE?

YES

NO

MATCH BINARY-BASED TEMPLATE ⟋ 905

MATCH RGB-BASED TEMPLATE ⟋ 907

IDENTIFY DIFFERENCE BASED ON
TEMPLATE MATCHING RESULT ⟋ 909

END

FIG. 9

START

IDENTIFY INITIAL CORRECTION VALUE — 1001

PERFORM CORRECTION — 1003

IS CORRECTION STOP CONDITION SATISFIED? 1005
— YES

NO

MATCH CORRECTED VIRTUAL IMAGE AND REAL IMAGE 1007

DOES MATCHING RESULT SATISFY DESIGNATED MATCHING CONDITION? 1009

NO

YES

TERMINATE CORRECTION — 1011

END

FIG. 10A

FIG. 10B

FIG. 10C

1100

1155

1153

1155

1111

1101

1151

1101

1111

1150 { 1151
1153
1155

X

+Y

-Y

Z

FIG. 11

START

RECEIVE DATA ASSOCIATED WITH DIGITAL
TWIN MODEL SIMULATING REAL WORLD ~ 1201

IDENTIFY REAL IMAGE ~ 1203

IDENTIFY FIRST VIRTUAL IMAGE CORRESPONDING
TO POSITION OF WEARABLE ELECTRONIC DEVICE AND/OR
DIRECTION TOWARD WHICH WEARABLE ELECTRONIC
DEVICE FACES, BASED ON DATA ASSOCIATED
WITH DIGITAL TWIN MODEL ~ 1205

IDENTIFY DIFFERENCE BETWEEN REAL IMAGE AND FIRST
VIRTUAL IMAGE, BASED ON MATCHING OF FIRST REAL
OBJECT INCLUDED IN REAL IMAGE AND FIRST VIRTUAL
OBJECT INCLUDED IN FIRST VIRTUAL IMAGE ~ 1207

IDENTIFY SECOND VIRTUAL IMAGE CORRESPONDING
TO IDENTIFIED DIFFERENCE, BASED ON DATA
ASSOCIATED WITH DIGITAL TWIN MODEL ~ 1209

DISPLAY AT LEAST ONE VIRTUAL
OBJECT OF SECOND VIRTUAL IMAGE ~ 1211

END

FIG. 12A

FIG. 12B

## INTERNATIONAL SEARCH REPORT

| International application No. |
| --- |
| **PCT/KR2023/017758** |

| | |
| --- | --- |
| **A.** | **CLASSIFICATION OF SUBJECT MATTER** |

**G06T 19/20**(2011.01)i; **G06T 19/00**(2011.01)i; **G06T 7/70**(2017.01)i; **G06T 7/30**(2017.01)i; **G06T 5/20**(2006.01)i; **H04N 23/69**(2023.01)i; **G02B 27/01**(2006.01)i

According to International Patent Classification (IPC) or to both national classification and IPC

| | |
| --- | --- |
| **B.** | **FIELDS SEARCHED** |

Minimum documentation searched (classification system followed by classification symbols)

G06T 19/20(2011.01); A42B 3/30(2006.01); G06Q 50/04(2012.01); G06Q 50/10(2012.01); G06T 7/20(2006.01); G06T 7/73(2017.01); G06T 7/80(2017.01); H04W 4/029(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 카메라(camera), 디지털 트윈 모델(digital twin model), 현실 세계(real world), 위치 (position), 방향(direction), 가상 이미지(virtual image), 오브젝트(object), 정합(matching)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | KR 10-2022-0087688 A (KOREA ADVANCED INSTITUTE OF SCIENCE AND TECHNOLOGY) 27 June 2022 (2022-06-27) | |
| | See paragraphs [0029] and [0061]; claims 1, 4 and 6; and figures 2 and 8a-8b. | 1-3,11,14-15 |
| A | | 4-10,12-13 |
| Y | KR 10-2022-0143528 A (P&C SOLUTION) 25 October 2022 (2022-10-25) | |
| | See claim 1. | 1-3,11,14-15 |
| A | KR 10-2022-0125539 A (MAMMOSSIX CO., LTD.) 14 September 2022 (2022-09-14) | |
| | See paragraphs [0008]-[0018]; and claims 1-7. | 1-15 |
| A | KR 10-2022-0027119 A (VIRNECT CO., LTD.) 07 March 2022 (2022-03-07) | |
| | See paragraphs [0013]-[0020]; and claims 1-11. | 1-15 |

☑ Further documents are listed in the continuation of Box C.    ☑ See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **06 February 2024** | **06 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2023/017758** |

### C.    DOCUMENTS CONSIDERED TO BE RELEVANT

| Category* | Citation of document, with indication, where appropriate, of the relevant passages | Relevant to claim No. |
|---|---|---|
| A | CN 114155299 A (YINGJIA INTERCONNECTION (BEIJING) SCIENCE AND TECHNOLOGY LIMITED COMPANY et al.) 08 March 2022 (2022-03-08)<br>See paragraphs [0005]-[0016]; and claims 1-8. | 1-15 |

Form PCT/ISA/210 (second sheet) (July 2022)

## INTERNATIONAL SEARCH REPORT
### Information on patent family members

International application No.

**PCT/KR2023/017758**

| Patent document cited in search report | | | Publication date (day/month/year) | Patent family member(s) | | | Publication date (day/month/year) |
|---|---|---|---|---|---|---|---|
| KR | 10-2022-0087688 | A | 27 June 2022 | None | | | |
| KR | 10-2022-0143528 | A | 25 October 2022 | WO | 2022-220658 | A1 | 20 October 2022 |
| KR | 10-2022-0125539 | A | 14 September 2022 | None | | | |
| KR | 10-2022-0027119 | A | 07 March 2022 | KR | 10-2021-0085789 | A | 08 July 2021 |
| | | | | KR | 10-2366293 | B1 | 22 February 2022 |
| | | | | US | 11151799 | B2 | 19 October 2021 |
| | | | | US | 2021-0201584 | A1 | 01 July 2021 |
| CN | 114155299 | A | 08 March 2022 | CN | 114155299 | B | 26 April 2022 |

Form PCT/ISA/210 (patent family annex) (July 2022)